# EUROPEAN PATENT APPLICATION

(11) **EP 2 591 761 A1**
(43) Date of publication of application: **15.05.2013**
(21) Application number: 11803341.4
(22) Date of filing: 07.07.2011
(51) Int. Cl.: A61J 3/00

(54) **TABLET INSPECTION ASSISTANCE METHOD AND TABLET INSPECTION ASSISTANCE SYSTEM**

(30) Priority: 09.07.2010 JP 2010156886
(71) Applicant: Panasonic Corporation, Kadoma-shi Osaka 571-8501 (JP)
(72) Inventor: GOTOU, Makoto, Osaka 540-6207 (JP); TANIMOTO, Takanobu, Osaka 540-6207 (JP); MATSUKAWA, Yoshihiko, Osaka 540-6207 (JP)
(74) Representative: Grünecker, Kinkeldey, Stockmair & Schwanhäusser
(86) International application number: PCT/JP2011/003904
(87) International publication number: WO 2012/005004

(57) **Abstract**

The tablet inspection support apparatus (11) includes: (i) a conveying unit (15) which conveys a medicine packaging sheet having a series of packets each of which encloses one or more tablets between two films; (ii) a transmitted-light illumination unit (17) which illuminates a packet from a side of one of the two films; (iii) a reflected-light illumination unit (16) which illuminates a packet from a side of the other of the two films; (iv) an imaging unit (18) which obtains, by capturing an image of a packet from a side of the other of the two films, a transmitted-light image that is an image of a packet illuminated by the transmitted-light illumination unit and a reflected-light image that is a color image of the packet illuminated by the reflected-light illumination unit; (v) an image processing unit (19) which detects a tablet region indicating a region of one or more tablets enclosed in a packet by using the transmitted-light image and generates a color tablet image by clipping an image of a region of the reflected-light image corresponding to the tablet region; and (vi) a display unit (20) which displays the tablet image generated by the image processing unit (19).

## Description

### [Technical Field]

The present invention relates to a method of supporting an inspection of tablets enclosed in a packet and a tablet inspection support apparatus.

### [Background Art]

It is hoped that a prescription work at a hospital facility, a pharmacy, or the like is carried out through precise dispensing of medicines according to a prescription without excess or deficiency. Dispensing of capsule tablets or solid tablets is implemented by separately enclosing tablets in a packet made of a medicine packaging sheet by using a tablet packaging machine. Then it is inspected whether or not enclosed tablets are correct in each of the packets (for example refer to Patent Literature 1).

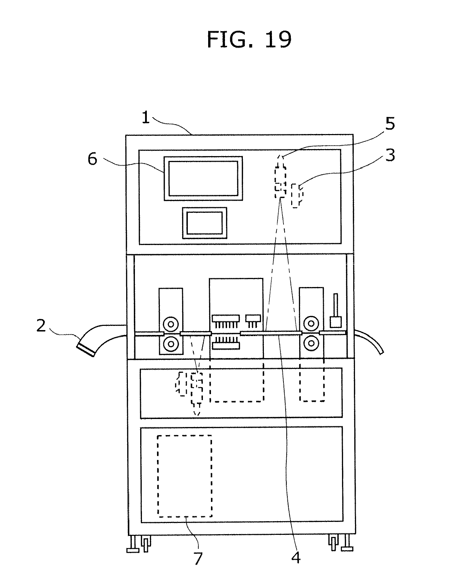

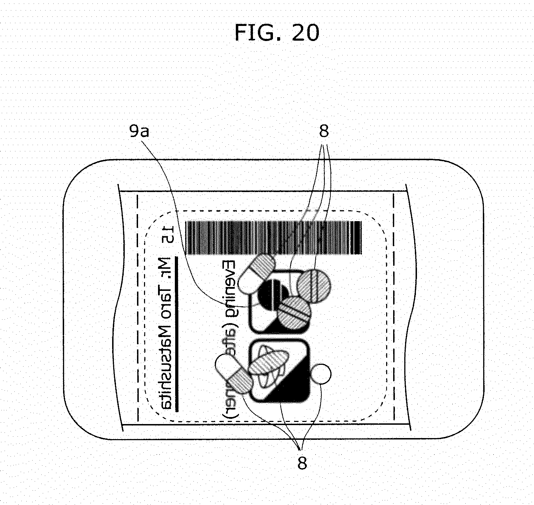

FIG. 19 illustrates an elevation view of a conventional tablet count and inspection apparatus 1. The conventional tablet count and inspection apparatus 1 aims to inspect the number of tablets enclosed in each of the packets made of packaging paper 2. The tablet count and inspection apparatus 1 includes an imaging device 3 for capturing an image of a packet after pulling in the packaging paper 2, an illumination device 5 for illuminating an imaging stage 4, and a display unit 6 for displaying an image captured by the imaging device 3. As an example of the imaging device 3, there is a charge-coupled device (CCD) camera. Moreover, as an example of the illumination device 5, there is a halogen lamp. Then an inspector inspects, by a captured image displayed on the display unit 6, whether or not tablets in a packet are correctly dispensed according to a prescription. FIG. 20 shows an example of the captured image displayed on the display unit 6. Here, in the captured image, as shown in FIG. 20, there is a part of a printed portion 9a and round tablets 8.

Moreover, the tablet count and inspection apparatus 1 includes a controller unit 7 which automatically counts, from the captured image, the number of tablets in a packet. The controller unit 7 counts the number of tablets by using the captured image and determines the counted number as the number of tablets enclosed in the packet. By comparing the counted number of tablets with the number of tablets based on a prescription, the controller unit 7 determines that tablets enclosed in the packet are appropriate when both numbers are the same and determines that tablets enclosed in the packet are not appropriate when both numbers are not the same. It is noted that in the tablet inspection by the tablet count and inspection apparatus 1, the image captured by the imaging device 3 as shown in FIG. 20 is displayed on the display unit 6 such that reliability of inspection is increased. With this, along with an inspection by the controller unit 7, a visual inspection by an inspector is also conducted.

### [Citation List]

### [Patent Literature]

[PTL 1]
Japanese Unexamined Patent Application Publication No. 2006-69618

### [Summary of Invention]

### [Technical Problem]

However, there is a case where positions of tablets in a packet are random and separate, making it difficult to conduct a visual inspection of tablets with a captured image of a packet displayed on the display unit 6. Moreover, the positions of tablets are different for each packet and there is a need to visually confirm and search the existence of tablets for each captured image.

Moreover, there is also a case where a printed portion of the packaging paper 2 of the packet is reflected in the captured image, making it difficult for an inspector to conduct a visual inspection of the tablets 8. For example, as shown in FIG. 20, the part of the printed portion 9a is recognized as one of the tablets 8 because of similarities in shape and size between the part of the printed portion 9a and the round tablets 8. As a result, there is a case where the number of tablets in the packet is wrongly calculated. In other words, the printed portion of FIG. 20 makes it difficult to conduct a visual inspection of the tablets. Especially, as shown in FIG. 20, a display of a black-and-white image makes it significantly difficult to identify the tablets by a visual confirmation.

The present invention aims to solve the aforementioned problem and has an object to provide a method and an apparatus of supporting an inspector to perform a visual inspection of tablets in a correct and quick manner.

### [Solution to Problem]

In order to attain the above mentioned goal, a tablet inspection support method according to an aspect of the present invention includes: (i) obtaining a transmitted-light image that is an image of a packet enclosing one or more tablets between two films, by capturing an image of the packet, in a state of illuminating the packet from a side of one of the two films, to a side of the other of the two films; (ii) obtaining a reflected-light image that is a color image of the packet, by capturing an image of the packet, in a state of illuminating the packet from the side of the one of the two films, to the side of the other of the two films; (iii) detecting, by using the transmitted-light image, a tablet region indicating a region of the one or more tablets enclosed in the packet; (iv) generating a tablet image by clipping an image of a region of the reflected-light image, the tablet image being a color image, and the region corresponding to the tablet region; and (v) displaying the tablet image on a display unit.

A tablet inspection support apparatus according to another aspect of the present invention includes: a conveying unit configured to convey a packet enclosing one or more tablets between two films; a transmitted-light illumination unit configured to illuminate the packet from a side of one of the two films to a side of the other of the two films; a reflected-light illumination unit configured to illuminate the packet from the side of the other of the two films; an imaging unit configured to capture an image of the packet from the side of the other of the two films; an image processing unit configured to (i) obtain a transmitted-light image being an image of the packet illuminated by the transmitted-light illumination unit, (ii) obtain a reflected-light image being a color image of the packet illuminated by the reflected-light illumination unit, (iii) detect, by using the transmitted-light image, a tablet region indicating a region of the one or more tablets enclosed in the packet, and (iv) generate a tablet image by clipping an image of a region of the reflected-light image, the tablet image being a color image, and the region corresponding to the tablet region; and a display unit configured to display the tablet image generated by the image processing unit.

### [Advantageous Effects of Invention]

The tablet inspection support apparatus and method of supporting a tablet inspection according to the present invention makes it possible to display a clear color image of tablets with little visual noise and support an inspector to perform a visual inspection in a correct and quick manner.

### [Brief Description of Drawings]

[Fig. 1]

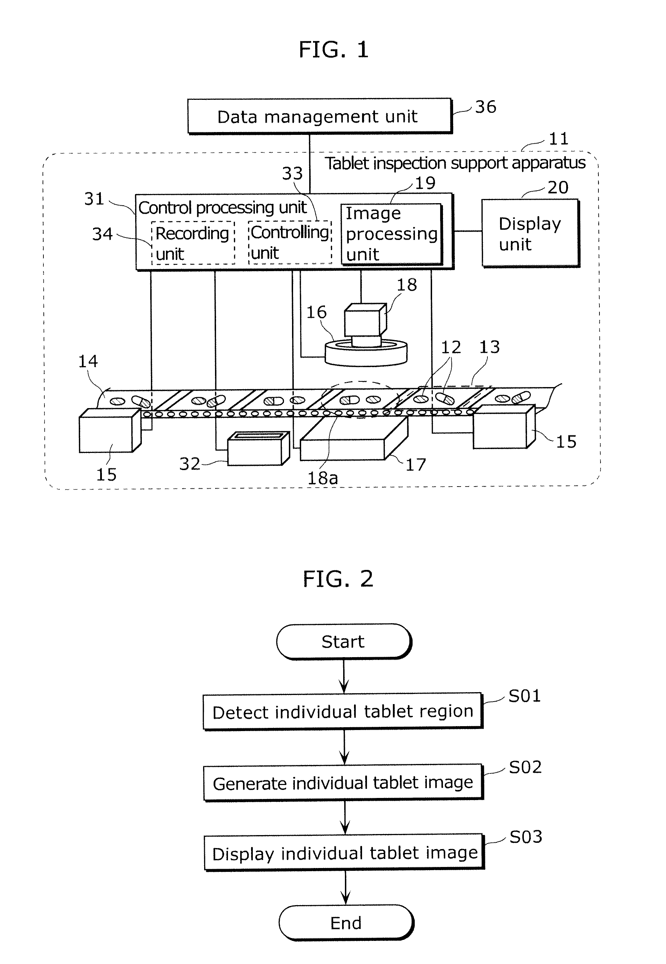

   FIG. 1 is a skeleton framework of a tablet inspection support apparatus according to Embodiment 1 of the present invention.
[Fig. 2]
   FIG. 2 is a flowchart showing basic operations of an image processing unit according to Embodiment 1 of the present invention.
[Fig. 3]

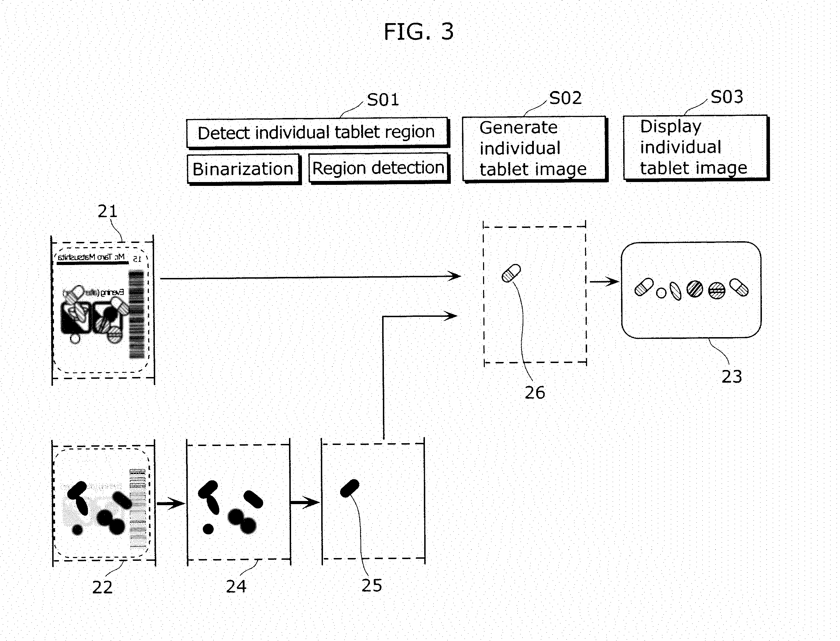

   FIG. 3 is a diagram illustrating the basic operations of the image processing unit according to Embodiment 1 of the present invention.
[Fig. 4]

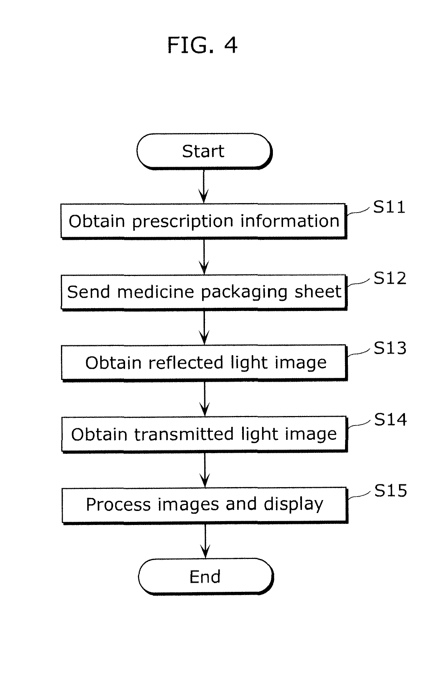

   FIG. 4 is a flowchart showing detailed operations of the tablet inspection support apparatus according to Embodiment 1 of the present invention.
[Fig. 5]

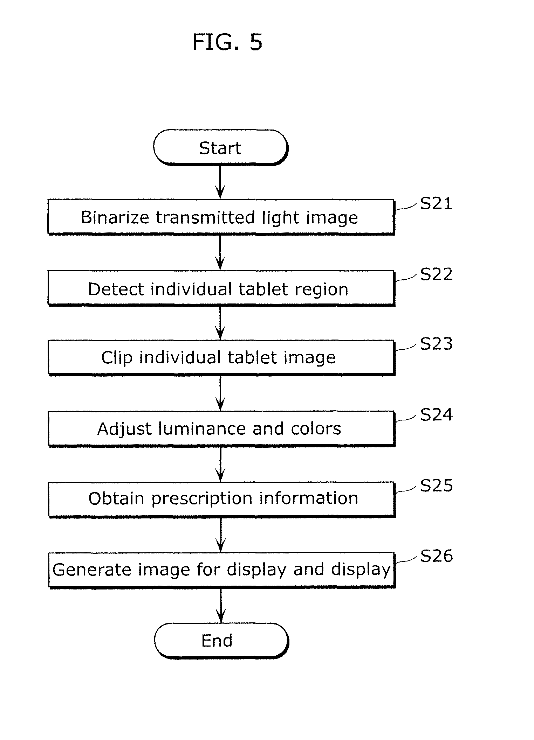

   FIG. 5 is a flowchart showing operations of the image processing unit according to Embodiment 1 of the present invention.
[Fig. 6A]

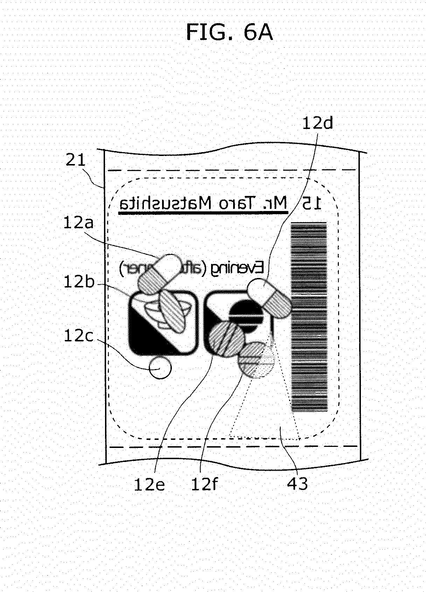

   FIG. 6A is a diagram showing a reflected-light image of a packet according to Embodiment 1 of the present invention.
[Fig. 6B]

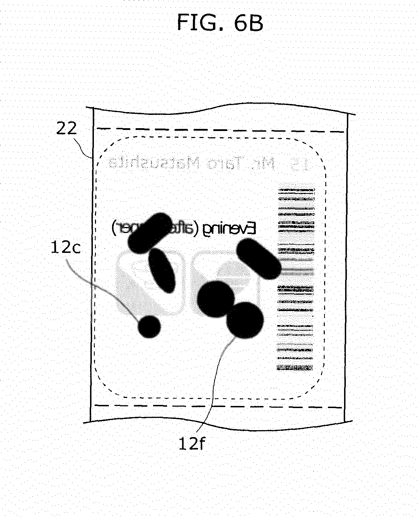

   FIG. 6B is a diagram showing a transmitted-light image of the packet according to Embodiment 1 of the present invention.
[Fig. 7A]

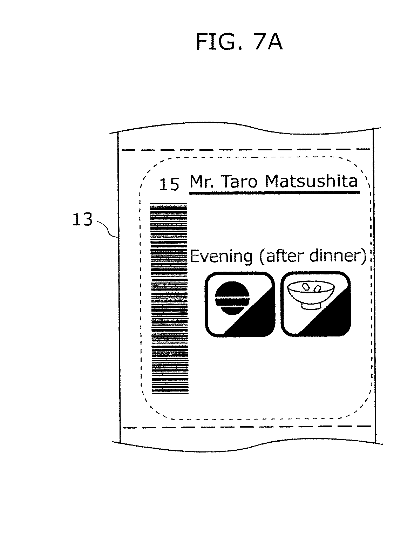

   FIG. 7A is a diagram of a packet having no tablet seen from an opposite side of an imaging unit according to Embodiment 1 of the present invention.
[Fig. 7B]

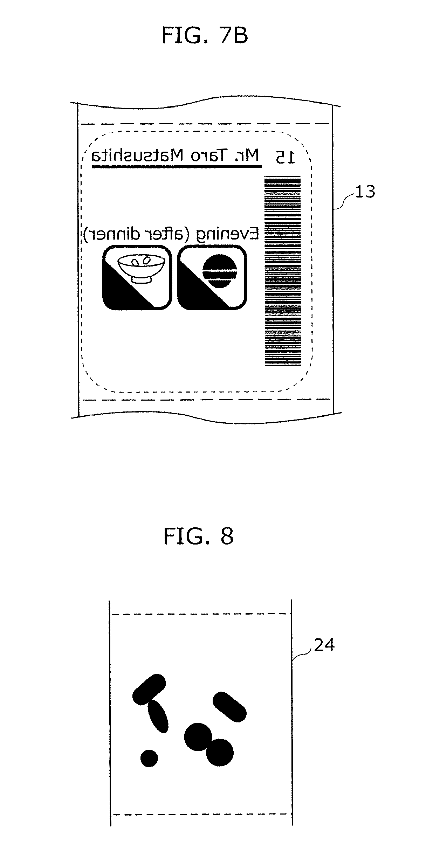

   FIG. 7B is a diagram of the packet having no tablet seen from a side of the imaging unit according to Embodiment 1 of the present invention.
[Fig. 8]
   FIG. 8 is a diagram showing a binarized image which is generated through binarization of the transmitted-light image according to Embodiment 1 of the present invention.
[Fig. 9A]

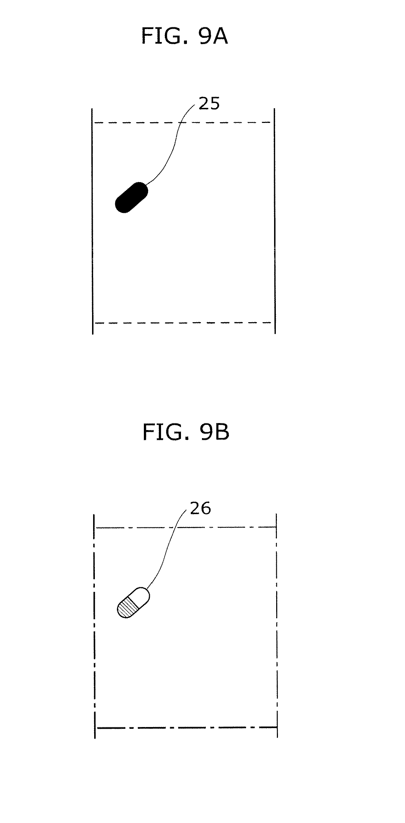

   FIG. 9A is a diagram showing an individual tablet region of a tablet according to Embodiment 1 of the present invention.
[Fig. 9B]
   FIG. 9B is a diagram showing the individual tablet image of the tablet according to Embodiment 1 of the present invention.
[Fig. 10A]

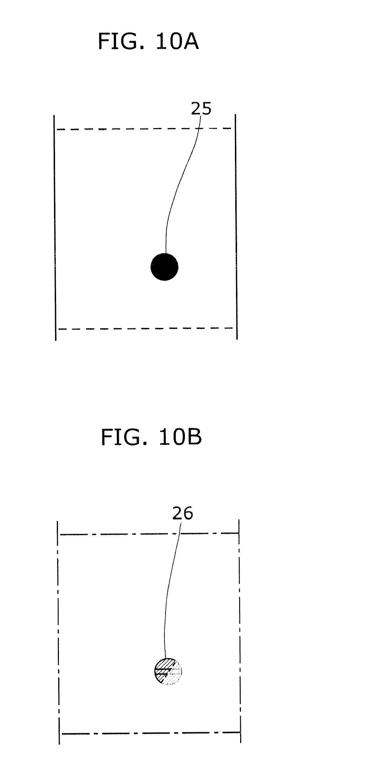

   FIG. 10A is a diagram showing an individual tablet region of another tablet according to Embodiment 1 of the present invention.
[Fig. 10B]
   FIG. 10B is a diagram showing an individual tablet image having a reflected portion of the other tablet according to Embodiment 1 of the present invention.
[Fig. 10C]

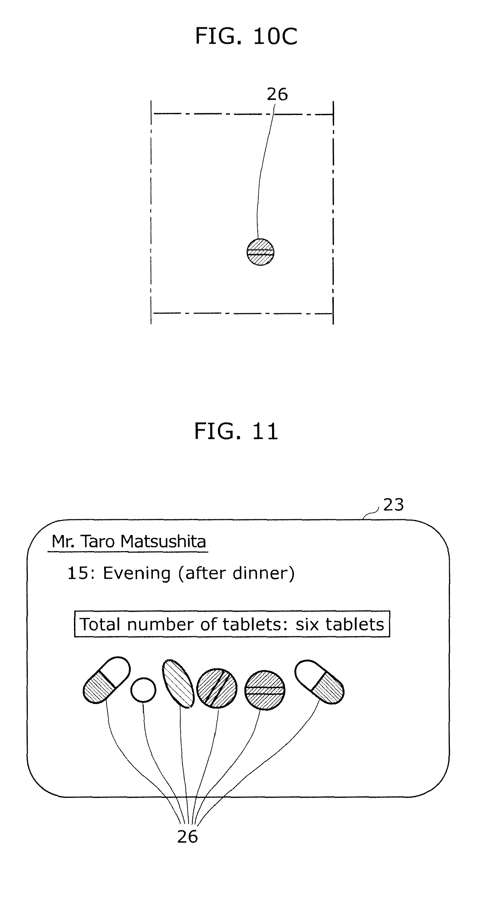

   FIG. 10C is a diagram showing an individual tablet image after luminance and color adjustments of the other tablet according to Embodiment 1 of the present invention.
[Fig. 11]
   FIG. 11 is a diagram showing a tablet group image of the tablet inspection support apparatus according to Embodiment 1 of the present invention.
[Fig. 12]

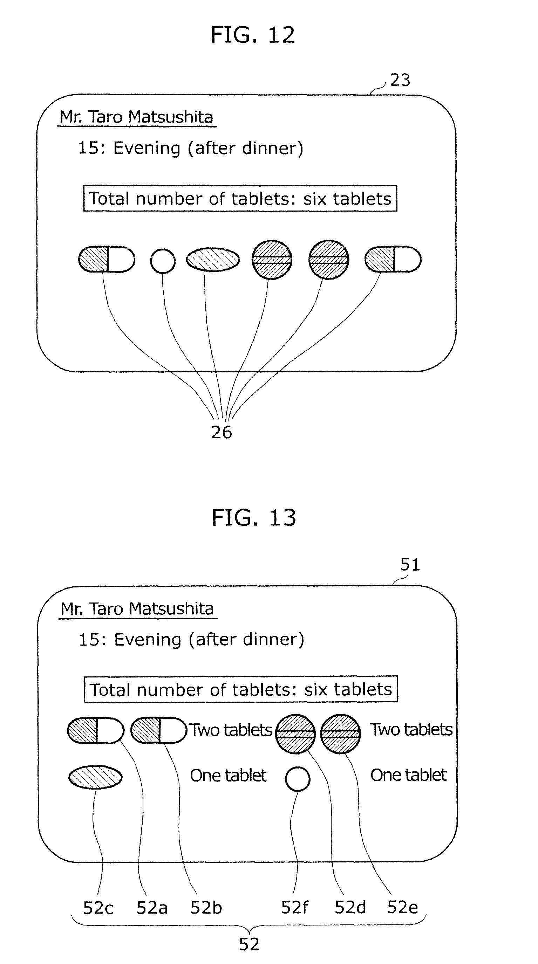

   FIG. 12 is a diagram showing the tablet group image of the tablet inspection support apparatus according to Embodiment 1 of the present invention.
[Fig. 13]
   FIG. 13 is a diagram showing a tablet group image of a tablet inspection support apparatus according to Embodiment 2 of the present invention.
[Fig. 14]

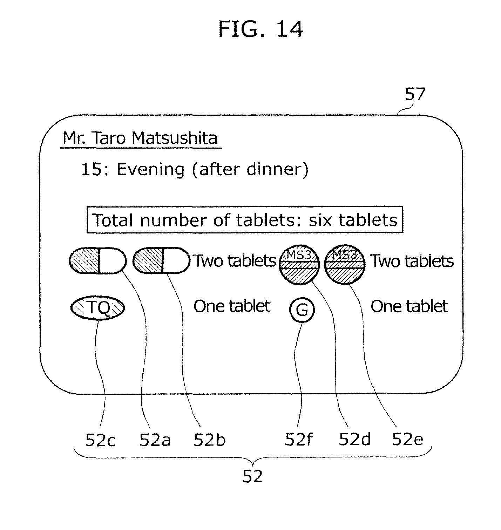

   FIG. 14 is a diagram showing a tablet group image of the tablet inspection support apparatus according to Embodiment 2 of the present invention.
[Fig. 15]

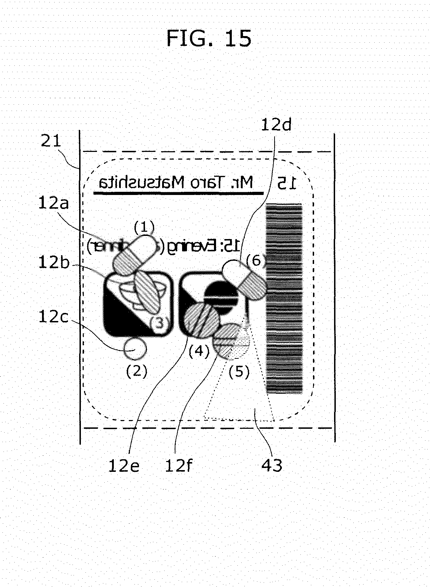

   FIG. 15 is a diagram showing a reflected-light image of the tablet inspection support apparatus according to Embodiment 2 of the present invention.
[Fig. 16]

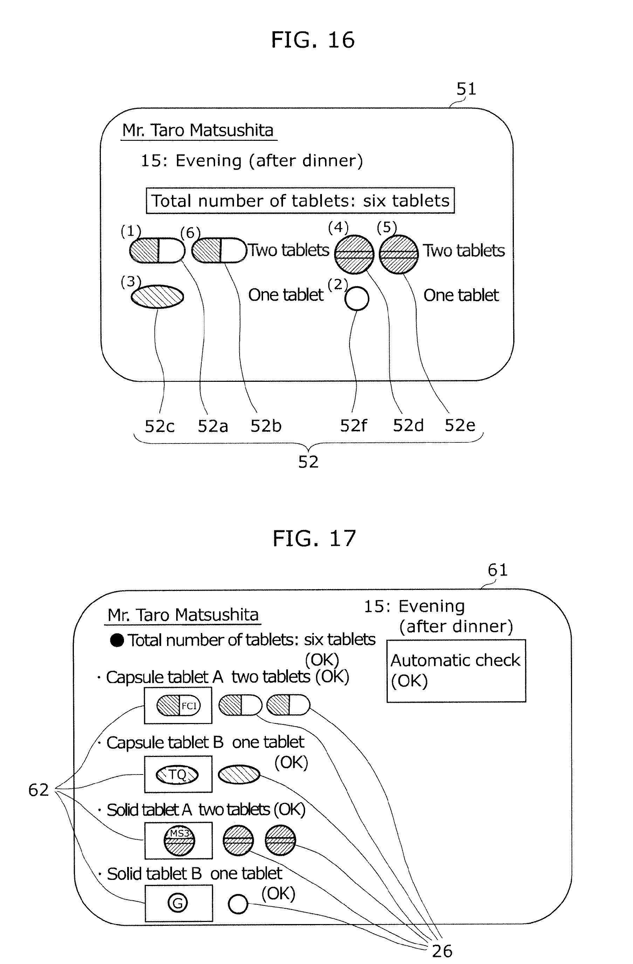

   FIG. 16 is a diagram showing a tablet group image of the tablet inspection support apparatus according to Embodiment 2 of the present invention.
[Fig. 17]
   FIG. 17 is a diagram showing a tablet group image of a tablet inspection support apparatus according to Embodiment 3 of the present invention.
[Fig. 18]

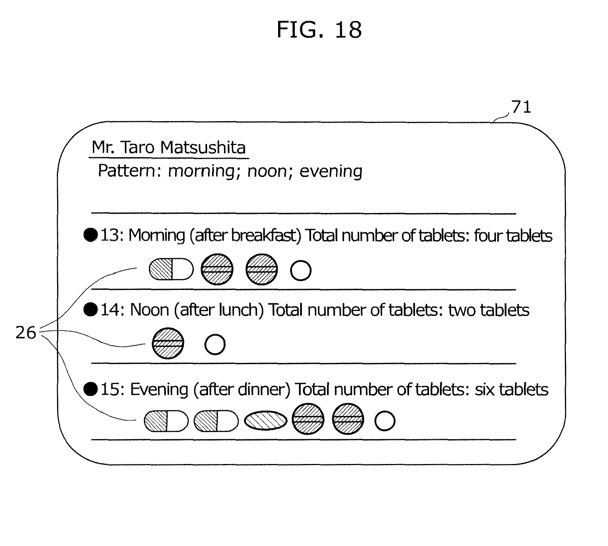

   FIG. 18 is a diagram showing a tablet group image of a tablet inspection support apparatus according to Embodiment 4 of the present invention.
[Fig. 19]
   FIG. 19 is an elevation view of a conventional tablet inspection support apparatus.
[Fig. 20]
   FIG. 20 is a diagram showing a displayed image of a packet in the conventional tablet inspection support apparatus.

### [Description of Embodiments]

Hereafter, embodiments of the present invention will be described with reference to drawings. It is noted that the same reference signs are assigned to the same constituent elements, and therefore there is a case where a description thereof is omitted. Moreover, each of the constituent elements is mainly and schematically shown such that the drawings are easier to understand.

### [Embodiment 1]

FIG. 1 is a skeleton framework of an important part of a tablet inspection support apparatus 11, and FIG. 2 is a flowchart showing basic operations of an image processing unit 19.

As shown in FIG. 1, the tablet inspection support apparatus 11 includes a conveying unit 15, an imaging unit 18, a reflected-light illumination unit 16, a transmitted-light illumination unit 17, a control processing unit 31, and a display unit 20. The conveying unit 15 is a unit which sends a medicine packaging sheet 14 having a series of packets 13, each of which encloses prescribed tablets 12 between two films. A CCD camera as an example of the imaging unit 18 obtains an image by capturing an image of the medicine packaging sheet 14. White light-emitting diodes (LEDs) as an example of the reflected-light illumination unit 16 illuminate the medicine packaging sheet 14 from the same side as the imaging unit 18. Red LEDs as an example of the transmitted-light illumination unit 17 illuminate the medicine packaging sheet 14 from the opposite side of the imaging unit 18. A computer as an example of the control processing unit 31 includes the image processing unit 19. The image processing unit 19 generates, from an image obtained by the imaging unit 18, a tablet image that is an image of a tablet. A Liquid Crystal Display (LCD) as an example of the display unit 20 displays the tablet image generated by the image processing unit 19.

Here, the reflected-light illumination unit 16 generates white illumination and the transmitted-light illumination unit 17 is illumination of a single color such as an infrared color or red. The reflected-light illumination unit 16 and the transmitted-light illumination unit 17 respectively radiate light to the packet 13 made of the medicine packaging sheet 14. Moreover, the image processing unit 19 is a part of the control processing unit 31 that controls the tablet inspection support apparatus 11. It is noted that the reflected-light illumination unit 16 is preferably a white illumination light. But instead of being limited to pure white illumination the reflected light illumination unit 16 may be another color illumination as long as the reflected-light illumination unit 16 is illumination of light including visible white light. By illuminating the packet 13 with light including visible white light, a color reflected-light image 21 can be captured.

The medicine packaging sheet 14, as shown in FIG. 1, is a sheet structure in which there is a continuous series of the packets 13, each of which encloses one or more tablets between a transparent film and a white film. In other words, each of the packets 13 is formed by enclosing a plurality of tablets between two thin films and the medicine packaging sheet 14 is formed by introducing a sheet structure in which there is a continuous string of the packets 13. The medicine packaging sheet 14 is disposed so that the transparent film is on the side of the reflected-light illumination unit 16 while the white film is on the side of the transmitted-light illumination unit 17. On the white film of the medicine packaging sheet 14, a name of a patient, a time for taking medicines, a medicine packaging number, a bar code, or the like is printed in a special black ink. So, one of the films (white film) of the packet 13 has a printed portion on which a name of a patient, a time for taking medicines, a medicine packaging number, a bar code, or the like is printed in ink. The transmitted-light illumination unit 17 is disposed at the side of the one of the two films (white film) having a printed portion of the packet 13, while the reflected-light illumination unit 16 is disposed at the side of the other of the two films (transparent film) of the packet 13. Moreover, in the present embodiment, the transparent film has no portion printed in ink.

The imaging unit 18 captures and obtains an image of the packet 13 made of the medicine packaging sheet 14 within an imaging area 18a. Therefore, the conveying unit 15 first conveys the medicine packaging sheet 14 such that a new packet 13 is positioned within the imaging area 18a.

Obtainment of a reflected-light image will be described. In order to obtain the reflected-light image, the reflected-light illumination unit 16 is turned on and the transmitted-light illumination unit 17 is turned off. In this condition, by capturing an image of the packet 13 by the imaging unit 18, the reflected-light image can be obtained in which white light of the reflected-light illumination unit 16 is reflected on the packet 13. With this, the reflected-light image that is a color image (image having full colors) of the packet 13 can be obtained. In other words, the reflected-light image of the imaging unit 18 is a color image of the packet 13 reflected on the packet 13 with white light emitted from the reflected-light illumination unit 16. Because the transparent film of the packet 13 is on the side of the reflected-light illumination unit 16, the reflected-light image is an image which directly faces the tablets in the packet 13. However, at this time, images of the printed portion printed on the white film of the packet 13 are simultaneously included in the reflected-light image.

Moreover, there is a case where white light of the reflected-light illumination unit 16 is reflected on the transparent film of the packet 13, and as a result of the film reflection, an image of a reflection region is included in a part of the reflected-light image, but the case will be described later.

Next, obtainment of a transmitted-light image will be described. In order to obtain the transmitted-light image, the reflected-light illumination unit 16 is turned off and the transmitted-light illumination unit 17 is turned on. In this condition, the imaging unit 18 obtains, by capturing an image of the packet 13, the transmitted-light image formed by infrared light or red light which is emitted from the transmitted-light illumination unit 17 and transmitted through the packet 13. With this, luminance significantly decreases in a portion where transmitted-light is blocked by tablets in the packet 13, thus a single color transmitted-light image is obtained which has gray scale corresponding to the presence or absence of tablets. In other words, the transmitted-light image of the imaging unit 18 is an image of the packet 13 formed by illumination light emitted from the transmitted-light illumination unit 17 and transmitted through the packet 13. The special black ink used in printing on the packet 13 has a property of being easy to transmit infrared light or red light which is close to infrared light. Moreover, the white film of the packet 13 has also a property of semi-transparency with respect to infrared light or red light. It is noted that even if infrared light or red light of the transmitted-light illumination unit 17 is reflected on the transparent film of the packet 13, the reflected light travels in a direction of the transmitted-light illumination unit 17 and does not reach the imaging unit 18. Therefore, a reflection region is not captured in the transmitted-light image.

It is noted that the imaging unit 18, the reflected-light illumination unit 16, the transmitted-light illumination unit 17, and the imaging area 18a are covered by an exterior component not illustrated. In other words, the exterior component has a configuration to block outside light such that outside light is not shed on the packet 13 within the imaging area 18a and a negative effect of the outside light does not occur. However, it is possible to remove the reflected-light illumination unit 16 in a configuration in which a light guide path is provided for guiding outside natural light to the imaging area 18a and when a reflected-light image is obtained by the imaging unit 18, the light guide path is opened so that natural light is radiated into the imaging area 18a. It is noted that in this case, natural light having properties intended in the present invention needs to be radiated. Moreover, if there is no problem with a negative effect of outside light, there is no need to block light with an exterior component.

The reflected-light image and the transmitted-light image both captured by the imaging unit 18 are sent to the image processing unit 19. In other words, the image processing unit 19 inputs the reflected-light image and the transmitted-light image both outputted by the imaging unit 18. FIG. 2 shows a flowchart showing the basic operations of the image processing unit 19. The image processing unit 19 detects, by using the transmitted-light image, an image region (hereafter referred to as individual tablet region) where there are one or more individual tablets 12 (step S01: individual tablet region detection step). Then the image processing unit 19 generates, as an individual tablet region, a reflected-light image of the image region portion corresponding to the individual tablet region (step S02: individual tablet image production step). Then the image processing unit 19 displays, on the display unit 20, the individual tablet image included in the packet 13 (step S03: display step). The display unit 20 is a display device such as a Liquid Crystal Display (LCD). By step S01, step S02, and step S03, the image processing unit 19 receives, as input, the transmitted-light image and the reflected-light image, detects, by using the reflected-light image, a tablet region which indicates a region of one or more tablets enclosed in the packet 13, and generates a color tablet image which is a portion image of the reflected-light image corresponding to the tablet region, and then the display unit 20 displays the color tablet image generated by the image processing unit 19.

FIG. 3 is a diagram illustrating the basic operations of the image processing unit 19. A reflected-light image 21 and a transmitted-light image 22, both obtained by the imaging unit 18, for each packet 13 are inputted into the image processing unit 19. In step S01, the image processing unit 19 detects an individual tablet region by using the transmitted-light image 22 of the packet 13. Hereafter, a method of detecting the individual tablet region will be described.

First, the image processing unit 19 obtains a binarized image 24 through binarizing the transmitted-light image 22 based on a level of luminance. A printed portion (for example, a name of a patient or a bar code) except tablets included in the transmitted-light image 22 does not appear in the binarized image 24 because the printed portion has a high level of luminance, comparing with portions of the tablets. As a result, a tablet region corresponding to the tablets in the packet 13 remains as a black region in the binarized image 24. The image processing unit 19 detects an individual tablet region 25 corresponding to an individual tablet from the tablet region (black region) of the binarized image 24. The detection of the individual tablet region 25 of the tablet 12 means detecting, from the binarized image 24 including the tablets 12, information about a tablet region (position information or region information) for each individual tablet 12 by determining a mass of black pixels (black region) as a single tablet 12. For example, when tablets are scattered, black regions of the binarized image 24 also exist independently, and each of the black regions is detected as an individual tablet region.

Moreover, although on a rare occasion, there is a case where tablets partially overlap with each other or tablets are in partial contact with each other. When the overlap of tablets or contact of tablets occurs, there are two tablets 12 in a black region. In this case, the image processing unit 19 detects an individual tablet region by providing separation treatment for the black region of the binarized image. It is noted that a variety of methods such as image reduction or watershed processing can be used for the separation treatment. With this, it is possible to detect an individual tablet region which is separated from the contact portion. Moreover, as a measure to cope with the tablet overlap or contact, it is preferable that a device for vibrating the packet 13, or a device such as a brush for churning the packet 13, during a conveying operation of the medicine packaging sheet 14 is installed in the tablet inspection support apparatus 11. By vibrating the packet by this device, the tablet overlap or contact can be eliminated.

Next, after the individual tablet region 25 is detected, the image processing unit 19 generates an individual tablet image 26 by clipping, from the reflected-light image 21, a partial image corresponding to the black region of the individual tablet region 25 (step S02). The imaging unit 18 obtains the reflected-light image 21 and the transmitted-light image 22 by capturing images of the same packet 13 on different illumination conditions. Therefore, a position of a tablet region of the tablet 12 in the reflected-light image 21 is the same as a position of a tablet region of the tablet 12 in the transmitted-light image 22. Therefore, by using the individual tablet region 25 of the tablet 12 detected by the transmitted-light image 22, it is possible to clip, from the reflected-light image 21, the individual tablet image 26 indicating the individual tablet 12. In FIG. 3, the individual tablet image 26 corresponding to the individual tablet region 25 is illustrated, but the image processing unit 19 generates a plurality of the individual tablet images 26 corresponding to a plurality of the individual tablet regions 25 obtained from the transmitted-light image 22 of the packet 13. It is noted that the individual tablet image 26 is also a full color image because the individual tablet image 26 is clipped from the reflected-light image 21 that is a full color image. In this way, the image processing unit 19 generates the color individual tablet image 26 through clipping a part of the reflected-light image 21 corresponding to the individual tablet region. In other words, the color individual tablet image 26 is a partial image of the reflected-light image 21 from which a part of the reflected-light image 21 corresponding to the individual tablet region is clipped. Then the image processing unit 19 detects all individual tablet regions 25 of all the tablets 12 in the packet 13 and generates a plurality of the color individual tablet images 26 corresponding to all the tablets 12.

In step S03, the image processing unit 19 displays, on the display unit 20, a plurality of the color individual tablet images 26 obtained from the captured images of a single packet 13 (transmitted-light image 22 and reflected-light image 21). With this, an image of the individual tablets in the packet 13 can be displayed without an influence of the printed portion of a film of the packet 13. As a result, an inspector can not only confirm the number of tablets but also tablet shapes, tablet colors, or tablet letters, thus making it easier to inspect the tablets enclosed in the packet 13.

Moreover, because the individual tablet image 26 is a color image of an individual tablet, it is also possible, for example, to arrange and display the individual tablet images 26 in a horizontal direction on the display unit 20 as a tablet group image 23. With this, it is possible to display with better visibility than an image in which the tablets 12 are scattered such as the reflected-light image 21 and it is easier to confirm all the tablets 12 in the packet 13.

Moreover, in a visual inspection by using only the reflected-light image 21, it is difficult for an inspector to identify the tablets in the packet 13 by a visual inspection because of reflected glare. The reflected glare in this case includes reflected glare by a reflection portion of reflected light by the transparent film of the packet 13, reflected glare by a background color portion of the white film, or reflected glare by an image noise influenced by the printed portion on the white film. In other words, on the reflected-light image 21 of the packet 13, there is an influence from the partial reflection portion of the transparent film, the background color portion of the white film, the printed portion on the white film, or the like. Therefore, the identification of the tablets by a visual inspection is difficult with only the reflected-light image 21. Moreover, in the visual inspection by using only the transmitted-light image 22, the tablets 12 are represented only by a black region, and therefore it is difficult for an inspector to visually identify the tablets in the packet 13. In other words, the transmitted-light image 22 is a gray image in which the tablets 12 are darkly captured, and there remains a significant influence from the printed portion of the film of the packet 13. Therefore, the identification of the tablets by the visual inspection is difficult with only the transmitted-light image 22. Compared with this, the individual tablet image 26 in the embodiment is a color image of an individual tablet 12, thus making it easier to perform a visual identification. Furthermore, by arranging and displaying all the color individual tablet images 26 on the display unit 20 as the tablet group image 23, a display suitable for a visual inspection is possible. In other words, the tablet inspection support apparatus 11 can support a visual inspection effectively for an inspector to inspect tablets of the packet 13 in a correct and quick manner because the tablet inspection support apparatus 11 displays a color individual tablet image 26 having a reduced effect of reflection, background colors, or a printed portion of a film of the packet 13. Moreover, the tablet inspection support apparatus 11 has a configuration which can support an inspector to perform a visual inspection in a correct and quick manner, such as use of prescription information.

Next, the tablet inspection support apparatus 11 using prescription information and the like will be described in detail. As shown in FIG. 1, the tablet inspection support apparatus 11 includes the conveying unit 15, the reflected-light illumination unit 16, the transmitted-light illumination unit 17, the imaging unit 18, the control processing unit 31, and the display unit 20. In addition, the tablet inspection support apparatus 11 includes a bar code reader 32. The control processing unit 31 includes, along with the image processing unit 19, a controlling unit 33 and a recording unit 34.

The controlling unit 33 of the control processing unit 31 controls an illumination timing of the reflected-light illumination unit 16, an illumination timing of the transmitted-light illumination unit 17, and an imaging timing of the imaging unit 18. Moreover, the controlling unit 33 controls an operation of sending a medicine packaging sheet 14 by the conveying unit 15 such that the medicine packaging sheet 14 is conveyed by a length of the packet 13 at a predetermined timing. The conveying unit 15, for example, includes a stepping motor, and the conveying unit 15 moves and conveys the medicine packaging sheet 14 in a right direction of FIG. 1.

The bar code reader 32 reads a bar code printed on the packet 13. In the bar code in each of the packets 13, a prescription code of the packet 13, a packet number of the packet 13, and the like are recorded. The controlling unit 33 of the control processing unit 31 inquires at a data management unit 36 about the prescription code of the packet 13 obtained from the bar code reader 32, and then holds prescription information about the packet 13. It is noted that the prescription information includes a prescription code, a patient's code, a name of a patient, a packaging pattern, the number of prescription days, and the like. The packaging pattern is information to specify a day's use of packets for a patient, such as a packaging pattern for such as a morning, noon and evening type, or a packaging pattern for a morning and evening type, or a packaging pattern for an evening type. For example, in the packaging pattern for the morning, noon, and evening type, the packet for the morning, the packet for noon, and the packet for the evening cyclically continue for predetermined days. Usually, tablets enclosed in a packet each for the morning, noon, and the evening are different in sort and number of tablets. Therefore, prescription information includes a tablet code, a tablet name, and the number of tablets for each sort of the tablets with respect to a plurality of tablets enclosed in each of the packets.

The recording unit 34 of the control processing unit 31 stores the reflected-light image 21 or the transmitted-light image 22 both obtained by the imaging unit 18, and an image processed by the image processing unit 19 or an image for display, or the like. The image processing unit 19 sequentially obtains images of the packet 13 the medicine packaging sheet 14, performs necessary processing, records necessary images, along with prescription information or bar code information, on the recording unit 34. Moreover, the image processing unit 19 displays a result on the display unit 20. In other words, the recording unit 34 of the control processing unit 31 records and stores, not only the reflected-light image 21 and the transmitted-light image 22, but also a plurality of color individual tablet images 26 corresponding to tablets enclosed in the packet 13, and a displayed image on the display unit 20 (tablet group image 23), along with prescription information or bar code information. The display unit 20 displays the tablet group image 23 which brings together the plurality of color individual tablet images 26 corresponding to the tablets enclosed in the packet 13.

It is noted that the data management unit 36 is a database for storing prescription information and the like supplied by a medical office, and transmits the prescription information to the tablet inspection support apparatus 11. Moreover, the data management unit 36 receives, from the tablet inspection support apparatus 11, and stores a variety of information including progress in processing. Moreover, the database of the data management unit 36 stores, regarding the prescribed tablets, a tablet code, a sample image, a shape, a size (projected area), a volume, a color, letter information, or the like for each tablet.

FIG. 4 is a flowchart showing operations of the tablet inspection support apparatus 11. The controlling unit 33 of the control processing unit 31 obtains a prescription code and a packet number of the packet 13 through the bar code reader 32, inquires at the data management unit 36 about the prescription code and the packet number, and obtains and stores the prescription information about the packet 13 from the data management unit 36 (step S11: prescription information obtainment step). It is noted that in the tablet inspection support apparatus 11 of FIG. 1, the bar code reader 32 reads a bar code of the packet 13 which moves immediately within the imaging area 18a.

Next, the controlling unit 33 of the control processing unit 31 instructs the conveying unit 15 to send the medicine packaging sheet 14, and the conveying unit 15 which receives the instruction moves and sends the medicine packaging sheet 14 (step S12: conveyance step). The conveying unit 15 sends a unit of the packet 13 made of the medicine packaging sheet 14 and then stops the movement of the packet 13. With this, the packet 13 corresponding to the prescription information in step S11 enters the imaging area 18a. In other words, the conveying unit 15, in compliance with the instruction of the controlling unit 33, conveys the medicine packaging sheet 14 by a length of the packet 13 at a predetermined timing, puts the packet 13 into the imaging area 18a, and later puts the medicine packaging sheet 14 in a stop state.

Next, the controlling unit 33 turns on the reflected-light illumination unit 16, turns off the transmitted-light illumination unit 17, and instructs the imaging unit 18 to capture an image. The imaging unit 18 captures an image of the packet 13 in the imaging area 18a illuminated by reflected light from the reflected-light illumination unit 16, and obtains the captured image as the reflected-light image 21 (step S13: reflected-light image obtainment step). The imaging unit 18 stores the obtained reflected-light image 21 in the recording unit 34. Because the medicine packaging sheet 14 is in a stop state, the imaging unit 18 captures an image of the packet 13 of the medicine packaging sheet 14 which is in a stop state and is illuminated by the reflected-light illumination unit 16 of white light, and obtains a color reflected-light image 21. The recording unit 34 stores the color reflected-light image 21.

Next, the controlling unit 33 turns off the reflected-light illumination unit 16, turns on the transmitted-light illumination unit 17, and instructs the imaging unit 18 to capture an image. The imaging unit 18 captures an image of the packet 13 in the imaging area 18a illuminated by transmitted light from the transmitted-light illumination unit 17, and obtains the captured image as the transmitted-light image 22 (step S14: reflected-light image obtainment step). The imaging unit 18 stores the obtained transmitted-light image 22 in the recording unit 34. Because the packet 13 of the medicine packaging sheet 14 is in a stop state, the imaging unit 18 captures an image of the packet 13 of the medicine packaging sheet 14 which is in a stop state and is illuminated by the transmitted-light illumination unit 17 of infrared light or a single color light of red light, and obtains a transmitted-light image 22. The recording unit 34 stores the transmitted-light image 22. With this, the imaging unit 18 obtains the transmitted-light image 22 and the reflected-light image 21, both of which are obtained by capturing an image of the packet 13 which is in a similar stop state.

After the obtainment of the transmitted-light image 22, the controlling unit 33 turns off the transmitted-light illumination unit 17. It is noted that the obtainment of the transmitted-light image 22 after the obtainment of the reflected-light image 21 is described, but the order may be vice versa. In other words, the reflected-light image 21 may be obtained after the obtainment of the transmitted-light image 22. The imaging steps of obtaining the transmitted-light image 22 and the reflected-light image 21 of the same packet 13 are composed as step S13 and step S14.

The image processing unit 19 generates an individual tablet image 26 by using the reflected-light image 21 and the transmitted-light image 22 both obtained by the imaging unit 18, and displays the individual tablet image 26 of the packet 13 on the display unit 20 (step S15: image processing step). At this time, prescription information may be additionally displayed. Moreover, the image processing unit 19 writes, on the recording unit 34, the individual tablet image 26 of the packet 13. In other words, the recording unit 34 stores the color reflected-light image 26 of the packet 13.

Next, detailed operations of the image processing unit 19 performed in step S15 will be described. FIG. 5 is a flowchart showing the detail operations performed by the image processing unit 19 in step S15. FIG. 6A and FIG. 6B are diagrams each showing an image of the packet 13 captured by the imaging unit 18. FIG. 6A is a diagram showing the reflected-light image 21, and FIG. 6B is a diagram showing the transmitted-light image 22.

The flowchart shown in FIG. 5 describes further in detail steps S01 to S03 shown in the flowchart of FIG. 2, including the prescription information and the like. FIG. 7A and FIG. 7B are diagrams each showing an image of the packet 13 having no tablet. FIG. 7A is a diagram showing a surface of the packet 13 seen from a side of the transmitted-light illumination unit 17, and FIG. 7B is a diagram showing a surface of the packet 13 seen from a side of the reflected-light illumination unit 16. FIG. 7A is an example of a printed portion seen from a white film side of the packet 13. On the white film of the packet 13, a bar code recording a name of a patient whose tablets are prescribed, a time for use, and/or prescription management information is printed. FIG. 7B indicates how a printed portion can be seen from a transparent film side of the packet 13. Because the imaging unit 18 is on the same side as the reflected-light illumination unit 16, the imaging unit 18 captures an image of the packet 13 as shown in FIG. 7B. It is noted that the special black ink (printing ink) used in printing of the packet 13 looks black with respect to white light, and has a property of being easy to transmit infrared light or red light.

FIG. 6A is the reflected-light image 21 obtained through step S13 of FIG. 4, and FIG. 6B is the transmitted-light image 22 obtained through step S14 of FIG. 4. In the reflected-light image 21 of FIG. 6A, there are tablets 12a, 12b, 12c, 12d, 12e, and 12f, and a printed portion which is printed on the white film. Moreover, in FIG. 6B, because of a deflection of the transparent film of the packet 13, a part of the transparent film partially reflects white light of the reflected-light illumination unit 16. The partially reflected portion of the transparent film is designated as a reflection area 43. Almost half of the tablet 12f is concealed by the reflection area 43. Moreover, the tablet 12c whose color is white is the same as the color of the white film of the packet 13, and therefore a visual confirmation is difficult. In this way, the color reflected-light image 21 of the packet 13 is influenced by the printed portion of the white film, the background portion of the color of the white film, the partial reflection portion of the transparent film, or the like. Therefore, the identification of the tablets is difficult with the visual inspection of only the reflected-light image 21 and visibility is bad.

Like the transmitted-light image 22 shown in FIG. 6B, the luminance of a portion on which transmitted light is blocked by the tablets 12 of the packet 13 significantly decreases, and makes it possible to obtain a transmitted-light image 22 having gray scale corresponding to the shapes of the tablets 12. As described above, the white film of the packet 13 according to the present embodiment or printing ink used for printing thereon have a property of being easy to transmit infrared light or red light. Moreover, even if infrared light or red light of the transmitted-light illumination unit 17 is reflected on the transparent film of the packet 13, the reflected light is scattered on the side of the transmitted-light illumination unit 17 and does not reach the imaging unit 18, and therefore an image of a reflection region is not captured in the transmitted-light image 22. Moreover, the white tablet 12c also blocks the transmitted light and therefore an image of the shape of the white tablet 12c is clearly captured. As already described above, the white film side of the packet 13 having a printed portion is on the side of the transmitted-light illumination unit 17 and on the opposite side of the imaging unit 18. As a result, illumination from the transmitted-light illumination unit 17 is blocked by the tablets 12 after passing through the white film of the packet 13, and reaches the imaging unit 18 after passing through the transparent film of the packet 13. Printing ink used in printing on the white film of the packet 13 has a property of being easy for transmitted-light illumination to be transmitted, but the printed portion by the printed ink slightly blocks transmitted light, and therefore the luminance of the transmitted light which passes through the printed portion slightly decreases. The imaging unit 18 captures an image of the transmitted light. With this, the luminance significantly decreases in places where there are tablets 12a, 12b, 12c, 12d, 12e, and 12f because transmitted light is blocked, and the transmitted-light image 22 having gray scale corresponding to the shapes of the tablets 12a, 12b, 12c, 12d, 12e, and 12f can be obtained. In other words, the transmitted-light image 22 is a grey image in which the tablets 12 are captured darkly, and there remains a sufficient influence from the printed portion of the film of the packet 13. Therefore, the identification of the tablets is difficult with the visual inspection of only the transmitted-light image 22 and visibility is bad.

As shown in the flowchart of FIG. 5, the image processing unit 19 receives, as input, the transmitted-light image 22 obtained by the imaging unit 18 and performs binarization processing for the transmitted-light image 22 at a luminance level (step S21: binarization step). With this, the printed region including the bar code in the transmitted-light image 22 disappears and the tablet region becomes a clear black region in the binarized image 24. In other words, in the binarized image 24 of the transmitted-light image 22, an influence of the printed portion of the packet 13 remaining in the transmitted-light image 22 is reduced or eliminated. FIG. 8 is a diagram showing the binarized image 24 which is generated through binarization of the transmitted-light image 22.

Next, the image processing unit 19 detects, from the binarized image 24, an individual tablet region 25 corresponding to an individual tablet (step S22: region detection step). In other words, the image processing unit 19 detects a tablet region indicating a region of tablets enclosed in the packet 13 in a stop state such that a region indicating a printed portion of a film of the packet 13 in a stop state is not included.

The detection of an individual tablet region of the tablet 12 means detecting, from the binarized image 24 including the plurality of tablets 12, position information of a tablet region for each of the tablets 12 by determining a mass of black pixels (black region) as a single tablet 12. For example, because when tablets 12 are scattered, black regions of the binarized image 24 also independently exist, each of the black regions is detected as an individual tablet region. It is noted that an individual tablet region detection step are composed as step S21 and step S22. In other words, the image processing unit 19 detects an individual tablet region indicating a region of a tablet enclosed in the packet 13 in a stop state such that a region indicating a printed portion of a film of the packet 13 is not included.

Next, when the individual tablet region 25 is detected, the image processing unit 19 generates an individual tablet image 26 by clipping, from the reflected-light image 21, an image of a region corresponding to a black region of the individual tablet region 25 (step S23: image clipping step). In other words, the image processing unit 19 receives, as input, the transmitted-light image 22 and the full color reflected-light image 21, and generates the full color tablet image by clipping a part of the reflected-light image 21 corresponding to a tablet region which is detected by using the transmitted-light image 22.

FIG. 9A and FIG. 9B are diagrams each showing an image of the tablet 12. FIG. 9A is a diagram showing the individual tablet region 25, and FIG. 9B is a diagram showing the individual tablet image 26. In FIG. 3, the individual tablet image 26 corresponding to an individual tablet region 25 is illustrated, but the image processing unit 19 actually generates a plurality of the individual tablet images 26 corresponding to a plurality of the individual tablet regions 25 obtained from the transmitted-light image 22 of the packet 13. It is noted that all the individual tablet images 26 are color images because each of the individual tablet images 26 is clipped from the reflected-light image 21 that is a full color image. Then the individual tablet regions 25 of all the tablets 12 in the packet 13 are detected and the individual tablet images 26 corresponding to all the tablets 12 are generated. In other words, the image processing unit 19 receives, as input, the transmitted-light image 22 and the full color reflected-light image 21, detects, by using the transmitted-light image 22, plural units of the individual tablet region 25 indicating a region of a tablet enclosed in the packet 13 in a stop state, generates plural units of the individual tablet images 26 by clipping a part of the reflected-light image 21 corresponding to the individual tablet region. It is noted that there can be a case where the number of tablets enclosed in the packet 13 is one. In such a case, the number of tablets in the individual tablet region 25 is one and the number of tablets in the individual tablet image 26 is one. However, descriptions will be made below assuming that the number of tablets enclosed in the packet 13 is more than one.

It is noted that as described above, the tablet inspection support apparatus 11 has a configuration to include a brush (not illustrated) for vibrating the packet 13 such that there is no overlap of tablets 12 and a correct detection of the individual tablet region 25 is made. By installing a brush appropriately interposing between the conveying unit 15 and the imaging unit 18, the tablet inspection support apparatus 11 ensures that there is no overlap of tablets 12 in the packet 13 captured by the imaging unit 18. Moreover, even if the tablets 12 partially overlap despite use of a brush, the tablet inspection support apparatus 11 may detect the individual tablet region 25 through cutting processing of, on the image, a portion of the tablets 12 estimated to be in contact with respect to the binarized image 24. The cutting processing, for example, may also be performed through contraction processing in which a graphic is broken up into a predetermined pixel with respect to the binarized image 24. Because the individual tablet region 25 becomes a bit smaller when the cutting processing is performed, expansion processing for the region may be performed and then the individual tablet image 26 may be clipped.

Next, with respect to the clipped individual tablet images 26, luminance or color adjustment is made for each of the clipped individual tablet images 26 (step S24: adjustment step). For example, transformation processing is performed such that the luminance in the individual tablet image 26 falls within a range of a constant value. Or, transformation processing is performed such that the luminance for each color of R, G, and B falls within a range of a constant value. It is noted that an individual tablet image production step in which plural units of the individual tablet image are generated is composed as step S23 and step S24. It is noted that step S24 is an adjustment step and therefore the step can be operated when needed.

FIG. 10A and FIG. 10B are diagrams each showing an image of the tablet 12 which is partially reflected. FIG. 10A is a diagram showing the individual tablet region 25 used for the clipping of the individual tablet image, FIG. 10B is a diagram showing the clipped individual tablet image 26, and FIG. 10C is a diagram showing the individual tablet image 26 in which a color or luminance adjustment is made.

The individual tablet region 25 shown in FIG. 10A is a region corresponding to the tablet 12f (refer to FIG. 6A) which is partially concealed by the reflection area 43. Because a shape of the tablet 12f is clear in the binarized image 24 produced from the transmitted-light image 22, the individual tablet region 25 can be correctly detected regardless of the reflection area 43. However, as shown in FIG. 10B, the individual tablet image 26 clipped from the transmitted-light image 22 is an individual tablet image 26 which is partially reflected, thus making it difficult to identify a shape of a tablet at a time of a visual inspection. In such a case, the image processing unit 19 individually adjusts at least one of the luminance and the chromaticity of the individual tablet image 26. Visibility of the individual tablet image 26 is enhanced through adjusting at least one of the luminance and the chromaticity of the individual tablet image 26 and through reducing unevenness in the luminance or color of the individual tablet image 26. The individual tablet image 26 shown in FIG. 10C is generated after luminance and chromaticity adjustments with respect to the individual tablet image 26 shown in FIG. 10B. The luminance or chromaticity adjustment is made when needed, and therefore no adjustment is possible.

Next, as shown in the flowchart of FIG. 5, the image processing unit 19 obtains prescription information of the packet 13 held in the controlling unit 33 (step S25: information obtainment step). Then, the image processing unit 19 displays, by forming a pair of the individual tablet image 26 and the prescription information, the pair of the two on the display unit 20 (step S26: image display step). The display step in which a color tablet image generated by the image processing unit 19 is displayed on the display unit 20 is composed as step S25 and step S26. It is noted that step S25 is an information obtainment step and prescription information is obtained when needed. Moreover, step S26 is an image display step, and displays the individual tablet images 26 by rotation, rearrangement, or grouping when needed. Moreover, step S26, when needed, includes a display image production step in which a display image is generated through combination of the prescription information and the individual tablet image 26.

FIG. 11 shows a tablet group image 23 displayed on the display unit 20. The image processing unit 19 generates the tablet group image 23 in which plural units of the individual tablet image 26 are disposed in a horizontal direction, and displays the tablet group image 23 on the display unit 20. The total number of tablets shown in the tablet group image 23 is the number of the individual tablet images 26. Furthermore, the display unit 20 also displays a name of a patient (Mr. Taro Matsushita), a time period for taking medicines (evening (after dinner)), and the number of a packet (15), all of which are obtained from bar code information or prescription information. In other words, the display unit 20 displays plural units of the color individual tablet image 26 generated by the image processing unit 19 along with bar code information or prescription information. Moreover, the image processing unit 19 and the display unit 20 count the total number of tablets enclosed in the packet 13 by using the color tablet images and then display the total number of the tablets. Here, the image processing unit 19 counts the number of color individual tablet images as the total number of tablets, and the display unit 20 displays the total number of tablets.

With this, an image of each individual tablet in the packet 13 can be displayed by eliminating an influence of the printed portion. As a result, an inspector can not only confirm the number of tablets but also tablet shapes, tablet colors, tablet letters, or the like, thus making it easier to inspect the tablets enclosed in the packet 13. In other words, the image processing unit 19 receives, as input, the transmitted-light image 22 and the reflected-light image 21, detects the individual tablet region 25 indicating a region of a tablet enclosed in the packet 13, generates plural units of the color individual tablet images 26 by clipping a part of the reflected-light image 21 corresponding to the individual tablet region 25. Moreover, the display unit 20 displays the color individual tablet images 26 generated by the image processing unit 19. With this, it becomes significantly easier to inspect plural units of tablets enclosed in the packet 13.

Moreover, because the individual tablet image 26 is a full color individual tablet image, it is possible, for example, to arrange the individual tablet images 26 in a horizontal direction and display the individual tablet images 26 on the display unit 20 as the tablet group image 23. With this, it is possible to display with better visibility than an image in which tablets 12 are scattered such as the reflected-light image 21 and it is easier to confirm all the tablets 12 in the packet 13.

It is noted that in the detection of the individual tablet region 25, although a detection condition becomes complicated, the individual tablet region 25 may be detected by using the transmitted-light image 22 the reflected-light image 21. Even such a case is equivalent to the detection of the individual tablet region 25 by using the transmitted-light image 22, and thus is included in the present invention.

Moreover, it is noted that because prescription information is also displayed along with the individual tablet images 26 arranged in a row, it is possible to inspect the tablets 12 of the packet 13 while confirming part of the prescription information. Moreover, the image processing unit 19 individually adjusts and displays at least one of the luminance and the chromaticity of the individual tablet image 26. With this, even if the clipped individual tablet images 26 are different in luminance or chromaticity, the individual tablet images 26 having homogenization and good visibility can be displayed after adjustment. For example, even if the packet 13 is reflected and therefore the individual tablet image 26 is unclear, it is possible to generate the individual tablet image 26 having enhanced visibility through adjusting at least one of the luminance and chromaticity of the individual tablet image 26. In other words, the image processing unit 19 and the display unit 20 individually adjust at least one of the luminance and the chromaticity of the individual tablet image 26, and display the color individual tablet image after adjustment.

In this way, the tablet inspection support apparatus 11 according to Embodiment 1 can support an inspector to perform a visual inspection in a correct and quick manner.

It is noted that the image processing unit 19 may, in the tablet group image 23 shown in FIG. 11, rotate each of the individual tablet images 26, generate the tablet group image 23 shown in FIG. 12, and display the tablet group image 23 on the display unit 20. For example, an individual tablet image 26 having an elliptical shape is rotated based on at lease one of a size, a shape, and a color. More specifically, a long axis is oriented in a horizontal direction and the individual tablet image 26 is rotated such that the colors on the left side and the right side are uniform. Moreover, an individual tablet image 26 having a round shape, based on a design, is rotated such that a straight line in the individual tablet image 26 is oriented in a horizontal direction. With this, because the color individual tablet images 26 corresponding to the tablets enclosed in the packet 13 can be displayed in a uniform orientation of the tablet 12, visibility of display is enhanced and a visual inspection becomes easier.

It is noted that the tablet inspection support apparatus 11 detects a bar code for each packet 13 with the bar code reader 32 and obtains prescription information from the data management unit 36. At this time, in the case where the packets 13 having the same prescription are formed into a series of packets of the medicine packaging sheet 14, it is possible to use, as prescription information about each of the packets 13, prescription information obtained based on the bar code of the packet 13 first detected in the medicine packaging sheet 14.

Moreover, a Radio Frequency Identification (RFID) tag, instead of the bar code, may be installed on the packet 13. In that case, the RFID tag is installed on the head of the medicine packaging sheet 14, and the tablet inspection support apparatus 11 may obtain prescription information recorded on the RFID tag and may determine the obtained prescription information as the prescription information for each of the packets 13. It is noted that in the case where a packaging pattern of the packet 13 of the medicine packaging sheet 14 is used for the morning, noon and evening type, a packet 13 for the morning, a packet 13 for noon, and a packet 13 for the evening are continuously chained, and the three packets 13, as a pattern, are repeated for prescription days. The bar code of the packet 13 or prescription information corresponding to the RFID tag includes information about such a packaging pattern.

In Embodiment 1, by using a single imaging apparatus of the imaging unit 18, the reflected-light image 21 and the transmitted-light image 22 of the same packet 13 are captured and, by using the captured images, a plurality of individual tablet regions 25 equivalent to regions of a plurality of tablets 12 in the packet 13 are detected. Then, by clipping a part of the reflected-light image 21 corresponding to the plurality of individual tablet regions 25, a plurality of individual tablet images 26 are generated, and the plurality of individual tablet images 26 are displayed on a single screen. Here, because a color individual tablet image 26 corresponding to each of the tablets 12 is generated for each of the tablets 12 enclosed in the packet 13 and a plurality of individual tablet images 26 of the single packet 13 are displayed on a single screen, a visual confirmation by an inspector can be correctly and quickly implemented.

As a simplified configuration, it is possible to detect a complex tablet region corresponding to a plurality of tablet regions in the packet 13 by using captured images of the imaging unit 18 (binarized image 24 of FIG. 3), to generate a complex tablet image by clipping a portion of the reflected-light image 21 corresponding to the complex tablet region (image which is clipped reflected-light image 21 of FIG. 3 with binarized image 24), and to display the complex tablet image on a single screen. At this time, the complex tablet image is an image which is obtained by eliminating only a background noise from the reflected-light image 21 that is a color image, and there is an effect of slightly improving visibility. In other words, the image processing unit 19 receives, as input, the transmitted-light image 22 and the reflected-light image 21 of the imaging unit 18 and detects, by using the transmitted-light image 22, a tablet region (here, a complex tablet region) indicating a region of tablets enclosed in the packet 13 in a stop state. Then, the color tablet image (here, complex tablet image) is generated by clipping a portion of the reflected-light image 21 corresponding to the tablet region and the display unit 20 displays the color tablet image generated by the image processing unit 19 (here, complex tablet image).

With this, the image processing unit 19 and the display unit 20 can generate and display a color tablet image (here, complex tablet image) which reduces a background noise caused by a printed portion of a film of the packet 13, and therefore visibility of display is slightly improved and a visual inspection becomes easier.

It is noted that, as shown in Embodiment 1, when an individual tablet image of a full color image is generated corresponding to an individual tablet, luminance and chromaticity for each of the individual tablet images can be adjusted, and visibility is enhanced. Moreover, because it is possible to freely dispose and display each of the individual tablet images on a single screen, visibility is further enhanced.

In other words, the image processing unit 19 receives, as input, the transmitted-light image 22 and the reflected-light image 21 of the imaging unit 18 and detects, by using the transmitted-light image 22, plural units of an individual tablet region indicating a region of an individual tablet enclosed in the packet 13 in a stop state. Then, a plurality of color individual tablet images are generated by clipping a portion of the reflected-light image 21 corresponding to the individual tablet region and the display unit 20 displays the plurality of color tablet images generated by the image processing unit 19. As shown in Embodiment 1, the image processing unit 19 and the display unit 20 generate a color individual tablet image corresponding to each of the tablets enclosed in the packet 13, adjusts luminance or chromaticity for each of the color individual tablet images, and freely disposes and displays, on a single screen, the color individual tablet images that are adjusted. With this, visibility of the display screen is significantly improved and a visual inspection becomes easier.

### [Embodiment 2]

FIG. 13 is a diagram showing a tablet group image 51 of a tablet inspection support apparatus 11 according to Embodiment 2 of the present invention.

The tablet inspection support apparatus 11 according to Embodiment 2 of the present invention is composed of constituent elements similar to those of the tablet inspection support apparatus 11 according to Embodiment 1. Then, by producing and displaying a tablet group image 51 after rotation and grouping of the individual tablet images 52 in an image processing step performed by the image processing unit 19 (step S26 of FIG. 5), visibility of a display at a time of a tablet inspection is further enhanced.

As shown in FIG. 13, the tablet group image 51 includes an individual tablet image 52a and an individual tablet image 52b both corresponding to a capsule tablet A, an individual tablet image 52c corresponding to a capsule tablet B, an individual tablet image 52d and an individual tablet image 52e both corresponding to a solid tablet A, and an individual tablet image 52f corresponding to a solid tablet B.

In order to enhance visibility of the tablet group image 51, the image processing unit 19 rotates the individual tablet images 52 in step S26 of FIG. 5 (image display step). For example, the elliptical individual tablet images 52a, 52b, and 52c are rotated based on a shape or a color. More specifically, they are rotated such that a long axis is oriented in a horizontal direction and colors on the right and left sides are unified.

Moreover, the round individual tablet images 52d, 52e, and 52f, based on a design, are rotated such that straight lines in the individual tablet images are oriented in a horizontal direction.

In order to enhance visibility of the tablet group image 51, the image processing unit 19 groups the individual tablet images 52 which are similar in at least one of the shape, the size, and the color, arranges the individual tablet images 52 for each group, and displays the individual tablet images 52 on the display unit 20. Moreover, the image processing unit 19 displays, on the display unit 20, the number of the individual tablet images 52 for each group. Here, the number of the individual tablet image 52 corresponding to the capsule tablet A is two, that is, the individual tablet images 52a and 52b, the number of the individual tablet image 52 corresponding to the capsule tablet B is one, that is, the individual tablet image 52c, the number of the individual tablet images 52 corresponding to the solid tablet A is two, that is, the individual tablet images 52d and 52e, and the number of the individual tablet image 52 corresponding to the solid tablet B is one, that is, the individual tablet image 52f.

In this way, the individual tablet images 52 are displayed such that the longer sides of the individual tablet images 52 are oriented in the same direction and therefore visibility is superior. Therefore, the image processing unit 19 rotates the individual tablet images 52 such that the longer sides of the individual tablet images 52 are oriented in the same direction. With this configuration, the orientations of the individual tablet images 52 are arranged in one direction, making it easier to identify a shape of a size and to enhance a property of visual identification of tablets. In other words, the image processing unit 19 and the display unit 20 rotate the color individual tablet images 52 and display the color individual tablet images that are rotated. With this, the color individual tablet images corresponding to the tablets enclosed in the packet 13 can be displayed with a unified orientation of the tablets, and therefore visibility of display is enhanced and a visual inspection becomes easier.

Moreover, the image processing unit 19 forms the individual tablet images 52 into respective groups of images which are similar in a shape, a size, or a color, and arranges and displays, for each group, the individual tablet images 52 that are grouped. With this, the similar individual tablet images 52 are displayed in clusters. In other words, every type of the individual tablet images 52 is displayed in a cluster, and an identification property is enhanced.

Here, as a standard of similarity, it is considered whether the image processing unit 19 forms a group based on a size of the similar individual tablet images 52. The size of the individual tablet image 52 in this case is an area of the individual tablet image 52. Moreover, by determining a shape of an image as the standard of similarity, it can also be considered that the image processing unit 19 forms a group based on a color of the similar individual tablet images 52. Moreover, by determining a color of an image as the standard of similarity, it can also be considered that the image processing unit 19 forms a group based on a color of the similar individual tablet images 52. It is favorable that regarding these standards, based on prescription information, a specific standard of similarity for each tablets be set in advance and the standard of similarity suitable for each tablet be used. In other words, the image processing unit 19 and the display unit 20 form a plurality of color individual tablet images 52 into a group based on at least one of a shape and a color, and display each group of the color individual tablet images in a cluster. With this, visibility of display is enhanced and a visual inspection becomes easier.

FIG. 14 is a diagram showing a tablet group image 57 in the tablet inspection support apparatus 11 according to Embodiment 2 of the present invention. In order to enhance visibility of the tablet group image 57, the image processing unit 19 recognizes letters on the individual tablet images 52c, 52d, 52d, and 52f in step S26 of FIG. 5 (image display step), and generates and displays the tablet group image 57 in which each of the individual tablet images 52 is rotated in order to make it easier to read letters. Among the tablets 12 to be inspected, there is a tablet in which a tablet identification sign is inscribed or printed on the surface of the tablet. By displaying, as the tablet group image 57, the tablet identification sign which appears on the individual tablet images 52 by rotating the individual tablet image 26 in an orientation that is easy for an inspector to read, it becomes easier to read letters printed or inscribed on the tablets and an inspection including the types of tablets becomes easier. In other words, the image processing unit 19 and the display unit 20 detect tops and bottoms of the letters on the color individual tablet images 52, rotate the color individual tablet images 52 such that the tops and bottoms of the letters on the color individual tablet images 52 are aligned with the top and bottom of the display unit 20, and displays the color individual tablet images 52 that are rotated. With this, visibility of display of the individual tablet images 52 is enhanced and a visual inspection becomes easier.

It is noted that the image processing unit 19 of the tablet inspection support apparatus 11 may have a configuration which recognizes the tablet identification signs included in the individual tablet images 52, compare the tablet identification signs with the tablet identification signs included in prescription information, and determine whether or not the same tablet identification signs are included in the prescription information. With this configuration, the tablet inspection support apparatus 11 not only supports an inspector to perform a visual inspection but also inspects the types of tablets by itself, thus making it possible to implement a double check and to enhance reliability of the tablet inspection.

It is noted that the image processing unit 19 may associate, for each of the individual tablet images 52, the individual tablet image 52 with a position of the individual tablet image 52 in the reflected-light image 21 and may display, on the display unit 20, a plurality of the individual tablet images 52 associated with the positions in the reflected-light image 21.

In other words, the image processing unit 19 displays, on the display unit 20, the reflected-light image 21 as shown in FIG. 15 and the tablet group image 51 as shown in FIG. 16. The reflected-light image 21 as shown in FIG. 15 includes six tablets 12a, 12b, 12c, 12d, 12e, and 12f, and a number is assigned to each of the individual tablet images 52 when the images are clipped. With this, the image processing unit 19 associates the positions of the individual tablet images 52 with the positions of the individual tablet images 52 in the reflected-light image 21. For example, the tablets 12a, 12b, 12c, 12d, 12e, and 12f are provided with numbers 1, 3, 2, 6, 4, and 5, respectively. In FIG. 15, the numbers with brackets are indicated near each of the tablets 12 and the display unit 20 also displays the numbers at the same time. The tablet group image 51 shown in FIG. 16, in the tablet group image 51 as shown in FIG. 13, indicates, near the individual tablet image 52 of each tablet, the numbers with brackets which are provided when the individual tablet images 52 are clipped. The display unit 20 simultaneously displays the reflected-light image 21 as shown in FIG. 15 and the tablet group image 51 as shown in FIG. 16. With this, an inspector can know from which position in the reflected-light image 21 each of the individual tablet images 52 included in the tablet group image 51 is clipped. For example, in the tablet group image 51, it can be known that the individual tablet image 52a of the number 1 is an image when the tablet 12a of the number 1 is clipped in the reflected-light image 21. With this, it is possible to make a comparison of state for each of the individual tablet images in the reflected-light image 21. For example, in the case where it is not possible to understand the state only by looking at the individual tablet images 52, by looking at the positions corresponding to the reflected-light image 21, it is possible to see how the individual tablet images 52 are displayed in the reflected-light image 21 and how a peripheral region of the individual tablet images 52 in the reflected-light image 21 is displayed. With this, it can be confirmed that the individual tablet images 52 are difficult to be seen due to reflection of a film, and the like. It is noted that the display unit 20 may display the reflected-light image 21 and the tablet group image 51 one by one instead of simultaneously displaying the reflected-light image 21 and the tablet group image 51. For example, in the tablet group image 51, it is possible to display the reflected-light image 21 when an inspector specifies the number of a tablet and may highlight the specified number. By implementing in such a way, an inspector can easily make an association.

### [Embodiment 3]

FIG. 17 is a diagram showing a tablet group image 61 of a tablet inspection support apparatus 11 according to Embodiment 3 of the present invention.

The tablet inspection support apparatus 11 according to Embodiment 3 of the present invention is composed of constituent elements similar to those of the tablet inspection support apparatus 11 according to Embodiment 1. In an image processing step performed by the image processing unit 19 (step S25 and step S26), the tablet inspection support apparatus 11 obtains, as prescription information, a tablet sample image 62 for each of the prescribed tablets and the number of prescribed tablets from the data management unit 36. The image processing unit 19, by comparing the individual tablet images 26 with the tablet sample images 62, classifies all the individual tablet images 26 obtained by the image processing unit 19 according to a degree of similarity to the tablet sample images 62 that are prescription information. The image processing unit 19 compares, for each of the classifications, the number of the individual tablet images 26 with the number of prescribed tablets based on prescription information. The image processing unit 19 instructs the display unit 20 to display "OK" when both numbers are the same and instructs the display unit 20 to display "NG" when both numbers are different. Moreover, the image processing unit 19, after comparing the total number of the individual tablet images 26 with the total number of prescribed tablets based on prescription information, instructs the display unit 20 to display "OK" when both numbers are the same and instructs the display unit 20 to display "NG" when both numbers are different.

With this configuration, a result of comparing the total number of the individual tablet images 26 with the total number of prescribed tablets based on prescription information is displayed, making it possible to easily obtain an inspection result of the number of tablets. Moreover, the individual tablet images 26 are classified according to a degree of similarity to the tablet sample images 62 based on prescription information and the result of comparing the number of the classified individual tablet images 26 with the number of prescribed tablets based on prescription information is displayed, making it possible to easily obtain an inspection result of the number of tablets by type. Moreover, if a check result of the total number of the individual tablet images 26 and a check result of the classified individual tablet images 26 are both "OK", a result of an automatic check may be displayed as "OK", while if one of the check results is "NG," a result of an automatic check is displayed as "NG". With this, it is possible to support a tablet inspection of the tablets 12 enclosed in the packet 13 based on the tablet sample images based on prescription information.

Moreover, by producing and displaying the tablet group image 61 in which the tablet sample images 62 and the individual tablet images 26 are arranged, a comparison between tablets of the individual tablet images 26 and the tablet sample images 62 becomes easier, making it possible to support an inspector to perform a visual inspection in a correct and quick manner. In other words, the image processing unit 19 and the display unit 20 obtain the tablet sample image 62 based on prescription information, estimate a color individual tablet image 26 similar to the tablet sample image 62 from a plurality of the color individual tablet images 26, and dispose and display the estimated color individual tablet image 26 in the vicinity of the tablet sample images 62. With this, a comparison between the color individual tablet images 26 and the tablet sample image 62 becomes easier and a visual inspection become easier.

Moreover, by counting the number of the individual tablet images 26 similar to the tablet sample image 62, the number of the individual tablet images 26 for each of the tablet sample images 62 can be obtained. Then, a tablet inspection is automatically performed by comparing the number of prescribed tablets based on prescription information with respect to tablets in the tablet sample images 62 with the number of the individual tablet images and by determining whether or not both numbers are the same. For example, the number of tablets on the side of a tablet name based on prescription information as shown in FIG. 17 is the number of the individual tablet images 26 similar to the tablet sample image for each of the tablet names. If the number of the individual tablet images 26 which are counted matches the number of prescribed tablets based on prescription information about the tablets, letters "OK" are displayed. If not matched, letters "NG" are displayed. In this way, the tablet inspection support apparatus 11 makes it easier to perform a visual inspection by mechanically supporting an inspection of a number count for each of the tablets and by displaying the individual tablet images 26. In other words, the image processing unit 19 obtains the tablet sample images 62 and the number of prescribed tablets based on prescription information, counts the number of tablets similar to the tablet sample images 62 by using a plurality of the color individual tablet images 26, and obtains a result of comparing the counted number with the prescribed number based on prescription information. The display unit 20, as shown in the tablet group image 61 of FIG. 17, displays the counted number and the result of the comparison with respect to each tablet type, along with the tablet sample images 62. Moreover, the image processing unit 19 obtains the total number of prescribed tablets based on prescription information, counts the total number of tablets 12 in the packet 13 by using a plurality of the color individual tablet images, and obtains the result of comparing the total number of tablets with the total number of prescribed tablets. The display unit 20 displays the total number of tablets and the comparison result. In other words, the image processing unit 19 and the display unit 20 implement an automatic check on the plurality of tablets 12 enclosed in the packet 13 in order to determine whether to be matched or mismatched with prescription information, and display a result of the check. With this, the tablet inspection support apparatus 11 counts and displays the number of tablets by type with respect to the plurality of tablets 12 enclosed in the packet 13, and supports an inspection of the number count. Moreover, the tablet inspection support apparatus 11 displays, by comparison, the number of tablets by type with the number of prescribed tablets based on prescription information, thus supporting an inspection of comparison with prescription information.

Moreover, the image processing unit 19 of the tablet inspection support apparatus 11, in order to enhance visibility of the individual tablet images 26, may rotate the individual tablet images 26 such that the orientations of tablets are matched between the tablet sample images 62 and the individual tablet images 26. Moreover, the establishment of a tablet orientation of the tablet sample image 62 as a standard of the tablet orientation in the individual tablet images 26 allows a plurality of the individual tablet images 26 to arrange in a similar orientation, thus enhancing visibility of the individual tablet images even if the tablet sample images 62 are not displayed. It is noted that based on a shape, a size, or a color of the individual tablet image 26, the individual tablet image 26 is displayed by rotation such that a tablet orientation of the individual tablet image 26 matches a tablet orientation of the tablet sample image 62. In other words, the image processing unit 19 and the display unit 20 obtain the tablet sample image 62 based on prescription information, estimate a color individual tablet image similar to the tablet sample image 62 from a plurality of the color individual tablet images 26, rotate the estimated color individual tablet image 26 in order to become a tablet orientation corresponding to the tablet sample image 62, and display the color individual tablet image 26 that are rotated. With this, visibility is enhanced and an inspection becomes easier.

It is noted that the controlling unit 33 of the control processing unit 31 of the tablet inspection support apparatus 11 reads a bar code on the packet 13 made of the medicine packaging sheet 14 through the bar code reader 32, and obtains necessary prescription information from the data management unit 36 based on a prescription code included in the bar code. Here, a name of a patient, a patient's code, tablet information about each type of the prescribed tablets, the number of prescribed tablets, and the like are obtained from prescription information held by the data management unit 36. The prescription information includes tablet codes, tablet names, tablet sample images, tablet sizes, tablet shapes, tablet colors, and tablet letters. Moreover, the tablet sample image of each form of the tablets is adjusted to match or almost match a size of an individual tablet image of the tablet generated by the image processing unit 19 of the tablet inspection support apparatus 11. Therefore, by comparing the tablet sample image 62 with an image size of the individual tablet image 26, a similarity between the tablet images can be calculated.

### [Embodiment 4]

FIG. 18 is a diagram showing a tablet group image 71 in a tablet inspection support apparatus 11 according to Embodiment 4 of the present invention.

The tablet inspection support apparatus 11 according to Embodiment 4 of the present invention is composed of constituent elements similar to those of the tablet inspection support apparatus 11 according to Embodiment 1. In Embodiment 4, for example, tablets are enclosed in the packet 13 according to packaging patterns for the morning, noon, and evening type. In other words, in the medicine packaging sheet 14, a packet 13 for the morning is followed by a packet 13 for noon, the packet 13 for noon is followed by a packet 13 for the evening, and the packet 13 for the evening is followed by a packet 13 for the morning. In such a pattern, a medicine packaging sheet 14 is generated in a series of the packets 13 for prescription days. The image processing unit 19 of the control processing unit 31 generates the individual tablet images 26 of the packet 13 from captured images, and displays the individual tablet images 26 on the display unit 20.

In order to enhance visibility of the tablet group image 71 of FIG. 18, the image processing unit 19 obtains packaging patterns in step S25 of FIG. 5 (information obtainment step) and step S26 (image display step), and arranges and displays, based on the packaging patterns, a plurality of the individual tablet images 26 in a packet 13 for the morning, a plurality of the individual tablet images 26 in a packet 13 for noon, and a plurality of the individual tablet images 26 in a packet 13 for the evening. Based on bar code information and prescription information, a name of a patient, a packaging pattern (for example, pattern: morning; noon; and evening), a content of the packet 13 (for example, for morning, for noon, and for evening), and a packet number of the packet 13 are obtained. By compiling these pieces of information and the individual tablet images 26 for each of the packets 13 generated by the image processing unit 19 and forming, into a group, the packet 13 for the morning, the packet 13 for noon, and the packet 13 for the evening, all of which are packaging patterns, the individual tablet images 26 of the group of packets are displayed on a single screen of the display unit 20.

With this configuration, it is possible to perform a visual inspection, on a single screen, of the individual tablet images 26 of the packet 13 for each group of the packaging patterns. Usually, the number of the individual tablet images 26 in the packet 13 for the morning, the number of the individual tablet images 26 in the packet 13 for noon, and the number of the individual tablet images 26 in the packet 13 for the evening are different from each other. Therefore, when the individual tablet images 26 are displayed on a screen by a unit of a packet, the individual tablet images 26 are changed for each display screen with a result that a visual inspection is careless. Conversely, if the individual tablet images 26 are displayed for each group of the packaging patterns, there is little display change caused by a screen change and it becomes easier to conduct a visual inspection. Moreover, because the individual tablet images 26 of the packets 13 are displayed on a single screen, a total time for inspection can be shortened even if a time for inspection of a screen takes longer. In other words, the image processing unit 19 and the display unit 20 obtain packaging patterns based on prescription information, and simultaneously display, on a single screen of the display unit 20, a plurality of the color individual tablet images 26 with respect to a plurality of the packets 13 corresponding to a group of the packaging patterns. With this, there are fewer changes in a screen of the display unit 20 and therefore a visual inspection becomes easier.

It is noted that the tablet group image 71, for each of the packets 13, is an image in which the individual tablet images 26 are adjusted by rotation and similar individual tablet images 26 are arranged. In other words, the image processing unit 19 and the display unit 20 as necessary rotate, convey, enlarge, or reduce each of the color individual tablet images 26, and dispose and display the plurality of the color individual tablet images 26 on a screen. Moreover, it is acceptable to display the tablet sample images based on prescription information.

It is noted that Embodiments 1 to 4 may be appropriately combined with each other according to a purpose and the like. The imaging unit is acceptable as long as it has a configuration which obtains the color reflected-light image 21 and the transmitted-light image 22 that capture the same packet 13 in a stop state. The transmitted-light illumination unit 17 may have illumination of blue light or white light instead of illumination of infrared and red light. The tablets 12 to be inspected include a variety of publicly known tablets such as a solid tablet and a capsule tablet. Furthermore, various modifications are possible without departure from the spirit and scope of the present invention and the modifications are included in the present invention.

It is noted that the present invention can be realized as not only a tablet inspection support apparatus but also as: a tablet inspection support method including, as steps, processing units included in the apparatus; a program for causing a computer to execute these steps; a computer-readable recording medium such as a compact disc read only memory (CD-ROM) on which the program is recorded; information indicating the program; data or a signal. Moreover, such program, information, data, and signal may be distributed via a communication network such as the Internet.

### [Industrial Applicability]

The tablet inspection support according to the present invention generates and displays color tablet images corresponding to tablets enclosed in a packet and makes it possible to support an inspector to perform a visual inspection in a correct and quick manner, and therefore is effective as a tablet inspection support apparatus which is used at pharmacies and hospital facilities providing medicine packaging sheets based on prescriptions.

### [Reference Signs List]

11 Tablet inspection support apparatus
12, 12a, 12b, 12c, 12d, 12e, 12f Tablet
13 Packet
14 Medicine packaging sheet
15 Conveying unit
16 Reflected-light illumination unit
17 Transmitted-light illumination unit
18 Imaging unit
18a Imaging area
19 Image processing unit
20 Display unit
21 Reflected-light image
22 Transmitted-light image
23, 51, 57, 61, 71 Tablet group image
24 Binarized image
25 Individual tablet region
26, 52, 52a, 52b, 52c, 52d, 52e, 52f Individual tablet image
31 Control processing unit
32 Bar code reader
33 Controlling unit
34 Recording unit
36 Data management unit
43 Reflection area
62 Tablet sample image

## Claims

1. A tablet inspection support method, comprising:
obtaining a transmitted-light image that is an image of a packet enclosing one or more tablets between two films, by capturing an image of the packet, in a state of illuminating the packet from a side of one of the two films, to a side of the other of the two films;
obtaining a reflected-light image that is a color image of the packet, by capturing an image of the packet, in a state of illuminating the packet from a side of the other of the two films, to the side of the one of the two films;
detecting, by using the transmitted-light image, a tablet region indicating a region of the one or more tablets enclosed in the packet;
generating a tablet image by clipping an image of a region of the reflected-light image, the tablet image being a color image, and the region corresponding to the tablet region; and
displaying the tablet image on a display unit.

2. The tablet inspection support method according to Claim 1, wherein in the detecting, at least one individual tablet region is detected from the tablet region by using the transmitted-light image, the individual tablet region being a region of an individual one of the tablets,
in the generating, an individual tablet image is generated, by clipping an image of a region of the reflected-light image, the individual tablet image being a color image, and the region corresponding to the individual tablet region; and
in the displaying, the individual tablet image is displayed on the display unit.

3. The tablet inspection support method according to Claim 2, wherein in the generating, individual tablet images each of which is the individual tablet image are arranged in a row, and
in the displaying, the individual tablet images arranged in the row are displayed on the display unit.

4. The tablet inspection support method according to one of Claims 2 and 3,
wherein in the generating, the individual tablet image is rotated based on at least one of a size, a shape, and a color of the individual tablet image, and
in the displaying, the individual tablet image that is rotated is displayed on the display unit.

5. The tablet inspection support method according to any one of Claims 2 to 4,
wherein in the generating, the individual tablet images are grouped based on at least one of a size, a shape, and a color of the individual tablet image, and
in the displaying, the individual tablet images are displayed on the display unit, being arranged on a group-by-group basis.

6. The tablet inspection support method according to any one of Claims 2 to 5,
wherein in the generating, for each individual tablet image, a top and a bottom of a letter included in the individual tablet image are detected, and the individual tablet image is rotated such that the top and bottom are correctly oriented, and
in the displaying, the individual tablet image that is rotated is displayed on the display unit.

7. The tablet inspection support method according to any one of Claims 2 to 6,
wherein in the generating, a tablet sample image is obtained based on prescription information about the one or more tablets enclosed in the packet, and each individual tablet image is rotated such that an orientation of the individual tablet image matches an orientation of the tablet sample image most similar to the individual tablet image, and
in the displaying, the individual tablet image that is rotated and the tablet sample image are displayed on the display unit.

8. The tablet inspection support method according to any one of Claims 2 to 7,
wherein in the generating, a tablet sample image is obtained based on prescription information about the one or more tablets enclosed in the packet, and for each individual tablet image, an image in which the individual tablet image and the tablet sample image most similar to the individual tablet image are arranged is generated, and
in the displaying, an image in which the tablet sample image and the individual tablet image are arranged is displayed on the display unit.

9. The tablet inspection support method according to any one of Claims 2 to 8,
wherein in the displaying, a total number of the one or more tablets enclosed in the packet is calculated by using the individual tablet image, a total number of one or more tablets prescribed based on prescription information about the one or more tablets enclosed in the packet is obtained, and a result of comparing the total number of the one or more tablets enclosed in the packet with the total number of the one or more prescribed tablets is displayed on the display unit.

10. The tablet inspection support method according to any one of Claims 1 to 9,
wherein the one of the two films is a film on which a letter or a picture is printed.

11. The tablet inspection support method according to any one of Claims 1 to 10,
wherein light illuminating the packet from a side of the one of the two films is infrared light or red light.

12. The tablet inspection support method according to any one of Claims 1 to 11,
wherein light illuminating the packet from a side of the other of the two films is light including visible light.

13. A tablet inspection support apparatus comprising:
a conveying unit configured to convey a packet enclosing one or more tablets between two films;
a transmitted-light illumination unit configured to illuminate the packet from a side of one of the two films to a side of the other of the two films;
a reflected-light illumination unit configured to illuminate the packet from the side of the other of the two films to the side of the one of the two films;
an imaging unit configured to capture an image of the packet from the side of the other of the two films;
an image processing unit configured to (i) obtain a transmitted-light image being an image of the packet illuminated by the transmitted-light illumination unit, (ii) obtain a reflected-light image being a color image the packet illuminated by the reflected-light illumination unit, (iii) detect, by using the transmitted-light image, a tablet region indicating a region of the one or more tablets enclosed in the packet, and (iv) generate a tablet image by clipping an image of a region of the reflected-light image, the tablet image being a color image, and the region corresponding to the tablet region; and
a display unit configured to display the tablet image generated by the image processing unit.

14. The tablet inspection support apparatus according to Claim 13, wherein the image processing unit is further configured to detect from the tablet region, by using the transmitted-light image, at least one individual tablet region indicating a region of an individual tablet, and generate, an individual tablet image by clipping an image of a region of the reflected-light image, the individual tablet image being a color image, and the region corresponding to the individual tablet region, and
the display unit is configured to display the individual tablet image generated by the image processing unit.

15. The tablet inspection support apparatus according to Claim 14, wherein the image processing unit is further configured to rotate the individual tablet image based on at least one of a size, a shape, and a color of the individual tablet image, and
the display unit is configured to display the individual tablet image that is rotated.

16. The tablet inspection support apparatus according to one of Claims 14 and 15,
wherein the image processing unit is further configured to group the at least one individual tablet image based on at least one of a size, a shape, and a color of the individual tablet image, and
the display unit is configured to arrange and display the individual tablet image for each group.

17. The tablet inspection support apparatus according to any one of Claims 13 to 16,
wherein one of the two films is a film on which a letter or a picture is printed.

18. The tablet inspection support apparatus according to any one of Claims 13 to 17,
wherein the transmitted-light illumination unit is configured to radiate infrared light or red light.

19. The tablet inspection support apparatus according to any one of Claims 13 to 18,
wherein the reflected-light illumination unit is configured to radiate light including visible light.

## Amended claims

### Amended claims under Art. 19.1 PCT

**1.** (Amended) A tablet inspection support method, comprising:
obtaining a transmitted-light image that is an image of a packet enclosing one or more tablets between two films, by capturing an image of the packet, in a state of illuminating the packet from a side of one of the two films, to a side of the other of the two films, one of the two films having a printed portion, and the other of the two films being a transparent film;
obtaining a reflected-light image that is a color image of the packet, by capturing an image of the packet, in a state of illuminating the packet from a side of the other of the two films, to the side of the one of the two films;
detecting, by using the transmitted-light image, a tablet region indicating a region of the one or more tablets enclosed in the packet;
generating a tablet image by clipping an image of a region of the reflected-light image, the tablet image being a color image, and the region corresponding to the tablet region; and
displaying the tablet image on a display unit.

**2.** The tablet inspection support method according to Claim 1, wherein in the detecting, at least one individual tablet region is detected from the tablet region by using the transmitted-light image, the individual tablet region being a region of an individual one of the tablets,
in the generating, an individual tablet image is generated, by clipping an image of a region of the reflected-light image, the individual tablet image being a color image, and the region corresponding to the individual tablet region; and
in the displaying, the individual tablet image is displayed on the display unit.

**3.** The tablet inspection support method according to Claim 2,
wherein in the generating, individual tablet images each of which is the individual tablet image are arranged in a row, and
in the displaying, the individual tablet images arranged in the row are displayed on the display unit.

**4.** The tablet inspection support method according to one of Claims 2 and 3,
wherein in the generating, the individual tablet image is rotated based on at least one of a size, a shape, and a color of the individual tablet image, and
in the displaying, the individual tablet image that is rotated is displayed on the display unit.

**5.** The tablet inspection support method according to any one of Claims 2 to 4,
wherein in the generating, the individual tablet images are grouped based on at least one of a size, a shape, and a color of the individual tablet image, and
in the displaying, the individual tablet images are displayed on the display unit, being arranged on a group-by-group basis.

**6.** The tablet inspection support method according to any one of Claims 2 to 5,
wherein in the generating, for each individual tablet image, a top and a bottom of a letter included in the individual tablet image are detected, and the individual tablet image is rotated such that the top and bottom are correctly oriented, and
in the displaying, the individual tablet image that is rotated is displayed on the display unit.

**7.** The tablet inspection support method according to any one of Claims 2 to 6,
wherein in the generating, a tablet sample image is obtained based on prescription information about the one or more tablets enclosed in the packet, and each individual tablet image is rotated such that an orientation of the individual tablet image matches an orientation of the tablet sample image most similar to the individual tablet image, and
in the displaying, the individual tablet image that is rotated and the tablet sample image are displayed on the display unit.

**8.** The tablet inspection support method according to any one of Claims 2 to 7,
wherein in the generating, a tablet sample image is obtained based on prescription information about the one or more tablets enclosed in the packet, and for each individual tablet image, an image in which the individual tablet image and the tablet sample image most similar to the individual tablet image are arranged is generated, and
in the displaying, an image in which the tablet sample image and the individual tablet image are arranged is displayed on the display unit.

**9.** The tablet inspection support method according to any one of Claims 2 to 8,
wherein in the displaying, a total number of the one or more tablets enclosed in the packet is calculated by using the individual tablet image, a total number of one or more tablets prescribed based on prescription information about the one or more tablets enclosed in the packet is obtained, and a result of comparing the total number of the one or more tablets enclosed in the packet with the total number of the one or more prescribed tablets is displayed on the display unit.

**10.** The tablet inspection support method according to any one of Claims 1 to 9,
wherein the one of the two films is a film on which a letter or a picture is printed.

**11.** The tablet inspection support method according to any one of Claims 1 to 10,
wherein light illuminating the packet from a side of the one of the two films is infrared light or red light.

**12.** The tablet inspection support method according to any one of Claims 1 to 11,
wherein light illuminating the packet from a side of the other of the two films is light including visible light.

**13.** Amended) A tablet inspection support apparatus comprising:
a conveying unit configured to convey a packet enclosing one or more tablets between two films, one of the two films having a printed portion;
a transmitted-light illumination unit configured to illuminate the packet from a side of the one of the two films to a side of the other of the two films, the other of the two films being a transparent film;
a reflected-light illumination unit configured to illuminate the packet from the side of the other of the two films to the side of the one of the two films;
an imaging unit configured to capture an image of the packet from the side of the other of the two films;
an image processing unit configured to (i) obtain a transmitted-light image being an image of the packet illuminated by the transmitted-light illumination unit, (ii) obtain a reflected-light image being a color image the packet illuminated by the reflected-light illumination unit, (iii) detect, by using the transmitted-light image, a tablet region indicating a region of the one or more tablets enclosed in the packet, and (iv) generate a tablet image by clipping an image of a region of the reflected-light image, the tablet image being a color image, and the region corresponding to the tablet region; and
a display unit configured to display the tablet image generated by the image processing unit.

**14.** The tablet inspection support apparatus according to Claim 13,
wherein the image processing unit is further configured to detect from the tablet region, by using the transmitted-light image, at least one individual tablet region indicating a region of an individual tablet, and generate, an individual tablet image by clipping an image of a region of the reflected-light image, the individual tablet image being a color image, and the region corresponding to the individual tablet region, and
the display unit is configured to display the individual tablet image generated by the image processing unit.

**15.** The tablet inspection support apparatus according to Claim 14,
wherein the image processing unit is further configured to rotate the individual tablet image based on at least one of a size, a shape, and a color of the individual tablet image, and
the display unit is configured to display the individual tablet image that is rotated.

**16.** The tablet inspection support apparatus according to one of Claims 14 and 15,
wherein the image processing unit is further configured to group the at least one individual tablet image based on at least one of a size, a shape, and a color of the individual tablet image, and
the display unit is configured to arrange and display the individual tablet image for each group.

**17.** The tablet inspection support apparatus according to any one of Claims 13 to 16,
wherein one of the two films is a film on which a letter or a picture is printed.

**18.** The tablet inspection support apparatus according to any one of Claims 13 to 17,
wherein the transmitted-light illumination unit is configured to radiate infrared light or red light.

**19.** The tablet inspection support apparatus according to any one of Claims 13 to 18,
wherein the reflected-light illumination unit is configured to radiate light including visible light.
